(19) Europäisches Patentamt
European Patent Office
Office européen des brevets

(11) **EP 4 290 406 A1**

(12) **EUROPEAN PATENT APPLICATION**
published in accordance with Art. 153(4) EPC

(43) Date of publication:
**13.12.2023 Bulletin 2023/50**

(21) Application number: **22770424.4**

(22) Date of filing: **14.03.2022**

(51) International Patent Classification (IPC):
*G06K 9/00* (2022.01)   *G06K 9/62* (2022.01)
*G06N 3/04* (2023.01)   *G06N 3/08* (2023.01)

(52) Cooperative Patent Classification (CPC):
**G06F 18/00; G06N 3/04; G06N 3/08; G06V 10/46;
G06V 10/764; G06V 10/774; G06V 10/82**

(86) International application number:
**PCT/CN2022/080552**

(87) International publication number:
**WO 2022/194069 (22.09.2022 Gazette 2022/38)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **15.03.2021  CN 202110277005**

(71) Applicant: **Huawei Technologies Co., Ltd.
Shenzhen, Guangdong 518129 (CN)**

(72) Inventors:
• XU, Yushun
  **Shenzhen, Guangdong 518129 (CN)**
• YANG, Yi
  **Shenzhen, Guangdong 518129 (CN)**
• LIU, Jing
  **Shenzhen, Guangdong 518129 (CN)**
• QIU, Luyu
  **Shenzhen, Guangdong 518129 (CN)**

(74) Representative: **MERH-IP Matias Erny Reichl
Hoffmann
Patentanwälte PartG mbB
Paul-Heyse-Strasse 29
80336 München (DE)**

(54) **SALIENCY MAP GENERATION METHOD, AND ABNORMAL OBJECT DETECTION METHOD AND DEVICE**

(57)     Embodiments of this application relate to the field of artificial intelligence, and disclose a method for generating a saliency map. The method includes: performing disturbance processing on a first object to obtain a plurality of objects; screening the plurality of objects to obtain a plurality of updated objects, where the plurality of updated objects satisfy target data distribution, and a training sample of a target model also satisfies the target data distribution; inputting the plurality of updated objects into the target model to output a first prediction result; and generating a saliency map of the first object based on the first prediction result and the plurality of updated objects, to improve accuracy of the saliency map.

FIG. 3

**Description**

This application claims priority to Chinese Patent Application No. 202110277005.9, filed with the China National Intellectual Property Administration on March 15, 2021 and entitled "METHOD FOR GENERATING SALIENCY MAP, AND METHOD AND APPARATUS FOR DETECTING ABNORMAL OBJECT", which is incorporated herein by reference in its entirety.

**TECHNICAL FIELD**

This application relates to the field of artificial intelligence, and specifically, to a method for generating a saliency map, and a method and an apparatus for detecting an abnormal object.

**BACKGROUND**

Artificial intelligence (artificial intelligence, AI) is a theory, a method, a technology, or an application system that simulates, extends, and expands human intelligence by using a digital computer or a machine controlled by a digital computer, and achieves an optimal result by perceiving an environment, obtaining knowledge, and using the knowledge. In other words, the artificial intelligence technology is a branch of computer science and is intended to understand essence of intelligence and produce a new intelligent machine that can react in a manner similar to human intelligence. Artificial intelligence is to research design principles and implementation methods of various intelligent machines, so that the machines have perception, inference, and decision-making functions.

A most widely known disadvantage of AI is a "black box" nature, which means that a user does not know how and why the model produces an output. For example, when the user inputs an image of a cat into a classification model and the classification model predicts that this is a car, it is difficult to understand why this prediction is generated. Over the past few years, AI has achieved remarkable achievements in many applications in different fields. However, as people are increasingly dependent on machine learning models, decisions from these models affect human life. Can it be ensured that the decisions made by AI are trustworthy? The decisions are unexplainable. This is currently a biggest problem of artificial intelligence based on big data and deep learning. In other words, the model lacks transparency and explainability. This severely affects the degree of trust of users in the model and further limits the application and development of the model in real tasks (especially risk-sensitive tasks, such as unmanned driving, health care, and financial tasks).

The black box model is not innately explainable. Therefore, a saliency map (saliency map) is needed to obtain features that have greatest impact on the model output. Therefore, how to make the saliency map accurately reflect the impact of the features on the model output needs to be resolved urgently.

**SUMMARY**

This application provides a method for generating a saliency map, and a method and an apparatus for detecting an abnormal object, to improve accuracy of the saliency map.

To resolve the foregoing technical problem, embodiments of this application provide the following technical solutions:

According to a first aspect, this application provides a method for generating a saliency map. The method includes: obtaining a plurality of objects, where the plurality of objects are obtained by performing disturbance processing on a first object, the performing disturbance processing on a first object may include a plurality of manners, for example, performing noise addition processing on the first object, or performing blurring processing on the first object (for example, changing values of a plurality of pixels within a preset range), or performing masking processing on the first object (for example, randomly sampling a plurality of pixels for masking), and the first object may be image data, text data, or voice data; and performing screening processing on the plurality of objects based on a first condition, to obtain a plurality of updated obj ects, where the plurality of updated objects satisfy target data distribution, and the target data distribution is obtained based on a training sample. In other words, data distribution that the plurality of updated objects satisfy is consistent with data distribution that the training sample satisfies. Each of the plurality of updated objects (or a feature of each object obtained by performing feature extraction on each object) may be represented by using one coordinate in a spatial coordinate system. In the spatial coordinate system, space including coordinates of all objects may be considered as data distribution (hereinafter referred to as first data distribution) that the plurality of updated objects satisfy. Each training sample (or a feature of each training sample obtained by performing feature extraction on each training sample) may also be represented by using a coordinate in the spatial coordinate system. In the spatial coordinate system, space including coordinates of all training samples may be considered as data distribution that the training samples satisfy. When a deviation between the first data distribution and second data distribution falls within a preset range, it may be considered that the first data distribution and the second data distribution are consistent. In the solution provided in the first aspect of this application, both the first data distribution and the second data distribution are target data distribution. For better understanding, a specific example is used herein for description. Assuming that all the training samples are images of animals and that the images of the animals satisfy target data distribution, the target data distribution may be used to reflect features of the images (or image features) of the animals. An input of a trained model should also satisfy the target data distribution. For example, if the input is also an image of an animal (the model has learned a feature of the input object), the trained model can accurately predict the input. However, if the input is an image of a person, because the image of the person and the image of the animal obviously have different features and coordinate distribution thereof in the spatial coordinate system should also be different, accuracy of a prediction result of the model trained by using the image of the animal for the input image of the person is greatly reduced.

According to the solution provided in this application, it is found that disturbed first objects may not satisfy the target data distribution. Therefore, screening processing is performed on the disturbed first objects to obtain disturbed first objects that satisfy the target data distribution. The plurality of updated objects are input into a target model, so that a first prediction result is output. A saliency map of the first object is generated based on the first prediction result and the plurality of updated objects. The solution provided in the first aspect is an improvement on an existing disturbance-based explainable method. A saliency map generated by using the disturbance-based explainable method may be used to obtain features that have greatest impact on a model output, so that a black box model can be explained.

The solution provided in this application can improve explainability of a model whose input is image data, for example, improve explainability of an image classification model. Which feature of an image input into the image classification model has greatest impact on an output of the image classification model can be better understood by using the saliency map obtained in the first aspect. The solution provided in this application can improve explainability of a model whose input is voice data, for example, improve explainability of a multi-round dialog model. Which feature of an input voice is a basis for the multi-round dialog model to interact with a user can be better explained by using the saliency map obtained in the first aspect. The solution provided in this application can improve explainability of a model whose input is text data, for example, improve explainability of machine translation. Which feature of an input text has great impact on an output of a translation module can be better understood by using the saliency map obtained in the first aspect.

In a possible implementation, the target model is obtained by updating a preset model by using a first loss value, the first loss value is determined based on a deviation between a feature of the training sample and a weight vector of the preset model, and the feature of the training sample is obtained by performing feature extraction on the training sample by using the preset model. The performing screening processing on the plurality of objects based on a first condition, to obtain a plurality of updated objects includes: if the plurality of objects include a target object, deleting the target object from the plurality of objects to obtain the plurality of updated objects, where a distance between a feature of the target object and a weight vector of the target model exceeds a preset threshold, and the feature of the target object is obtained by performing feature extraction on the target object by using the target model. In this implementation, as the preset model is trained, the first loss value becomes smaller, and the weight vector of the preset model is closer to the feature of the training sample. A weight vector of a trained preset model, that is, the target model, can already reflect a data distribution feature of the training sample. In this implementation, the classification model needs to be trained only by using a normal sample, so that the classification model can distinguish between the normal sample and an abnormal sample, thereby reducing training difficulty in training the classification model and training costs of training the classification model, and further improving performance of the classification model.

In a possible implementation, the feature of the target object is specifically extracted by using a first feature extraction layer, the first feature extraction layer is any one of a plurality of feature extraction layers in the target model, the distance between the feature of the target object and the weight vector of the target model is specifically a distance between the feature of the target object and a weight vector of a second feature extraction layer, and the second feature extraction layer is any one of the plurality of feature extraction layers. In this implementation, a distance between the feature of the target object and a weight vector of any feature extraction layer may be extracted by using any feature extraction layer, and represents a distance between the feature of the target object and the weight vector of the target model.

In a possible implementation, the first feature extraction layer and the second feature extraction layer may be set to be a same feature extraction layer according to an actual application requirement, or the first feature extraction layer and the second feature extraction layer may be set to be different feature extraction layers according to an actual application requirement.

In a possible implementation, the first feature extraction layer is specifically a penultimate feature extraction layer in a plurality of feature extraction layers in a feature extraction model, the plurality of feature extraction layers are connected end-to-end, the target object is an input of the first feature extraction layer in the plurality of feature extraction layers, and the second feature extraction layer is specifically a last feature extraction layer in the plurality of feature extraction layers. In this implementation, a preferred first feature extraction layer and a preferred second feature extraction layer are provided, thereby increasing diversity of the solution.

In a possible implementation, if there are a plurality of weight vectors of the second feature extraction layer, a distance between the feature of the target object and a target weight vector of the second feature extraction layer exceeds the preset threshold, the distance between the feature of the target object and the target weight vector of the second feature extraction layer is a longest distance in a plurality of distances, and the plurality of distances include a distance between the feature of the target object and each weight vector of the second feature extraction layer. In this implementation, to better recognize an abnormal sample, in this implementation, whether the target object is an abnormal sample is determined based on the longest distance in the plurality of distances.

In a possible implementation, the target model is specifically obtained by updating the preset model by using the first loss value and a second loss value, the second loss value is determined based on a deviation between a target result and a real result of the training sample, the target result is determined based on a second prediction result and a preset function, the second prediction result is a prediction result of the preset model for the training sample, an input of the preset function is the second prediction result, an output of the preset function is the target result, and the output of the preset function is negatively correlated with the input of the preset function. In this implementation, the preset function is introduced in a model training process, and the input of the preset function is negatively correlated with the output of the preset function. Different outputs are selected based on different inputs of the preset function, no parameter needs to be manually adjusted, and different outputs can be automatically obtained based on different inputs. This prevents the model from being trapped in local optimization, reduces a convergence speed of the model, and makes performance of the trained model better.

In a possible implementation, the method further includes: setting weights of the plurality of updated objects to a first weight; setting weights of a plurality of remaining objects to a second weight, where the plurality of remaining objects are objects other than the plurality of updated objects in the plurality of objects, and the first weight is greater than the second weight; and inputting a first result and a second result into the target model, to output the first prediction result, where the first result is determined based on the first weight and the plurality of updated objects, and the second result is determined based on the second weight and the plurality of remaining objects. In this implementation, a larger weight is set for a normal sample, and a smaller weight is set for an abnormal sample. In a process of generating the saliency map, the normal sample is mainly used, and the abnormal sample is used as a supplement, thereby weakening impact caused by the abnormal sample in the process of generating the saliency map. In this way, the generated saliency map can better reflect impact of the feature on the output of the model.

According to a second aspect, this application provides a method for detecting an abnormal object. The method includes: obtaining a plurality of objects; performing feature extraction on a target object by using a feature extraction model, to obtain a feature of the target object, where the target object is any one of the plurality of objects, the feature extraction model is obtained by updating a preset model by using a first loss value, the first loss value is determined based on a deviation between a feature of a training sample and a weight vector of the preset model, and the feature of the training sample is obtained by performing feature extraction on the training sample by using the preset model; obtaining a distance between the feature of the target object and a weight vector of the feature extraction model; and determining that the target object is an abnormal object if the distance exceeds a preset threshold. In this implementation, the preset model may be updated by using the first loss value, and then the first loss value is updated based on an updated preset model, so that the preset model is updated again. As a quantity of updates increases, the weight vector of the preset model is closer to the feature of the training sample. A weight vector of a trained preset model, that is, a target model, can already reflect a data distribution feature of the training sample. In this implementation, a classification model needs to be trained only by using a normal sample, so that the classification model can distinguish between the normal sample and an abnormal sample, thereby reducing training difficulty in training the classification model and training costs of training the classification model, and further improving performance of the classification model.

In a possible implementation, the performing feature extraction on a target object by using a feature extraction model, to obtain a feature of the target object includes: performing feature extraction on the target object by using a first feature extraction layer, to obtain the feature of the target object, where the first feature extraction layer is any one of a plurality of feature extraction layers in the feature extraction model; and the obtaining a distance between the feature of the target object and a weight vector of the feature extraction model includes: obtaining a distance between the feature of the target object and a weight vector of a second feature extraction layer, where the second feature extraction layer is any one of the plurality of feature extraction layers. In this implementation, a distance between the feature of the target object and a weight vector of any feature extraction layer may be extracted by using any feature extraction layer, and represents a distance between the feature of the target object and the weight vector of the target model.

In a possible implementation, the first feature extraction layer and the second feature extraction layer are a same feature extraction layer or different feature extraction layers.

In a possible implementation, the first feature extraction layer is a penultimate feature extraction layer in the plurality of feature extraction layers in the feature extraction model, the plurality of feature extraction layers are connected end-to-end, the target object is an input of the first feature extraction layer in the plurality of feature extraction layers, and the second feature extraction layer is a last feature extraction layer in the plurality of feature extraction layers. In this implementation, a preferred first feature extraction layer and a preferred second feature extraction layer are provided, thereby increasing diversity of the solution.

In a possible implementation, the obtaining a distance between the feature of the target object and a weight vector of a second feature extraction layer includes: if there are a plurality of weight vectors of the second feature extraction layer, obtaining a distance between the feature of the target object and each weight vector of the second feature extraction layer. The determining that the target object is an abnormal object if the distance exceeds a preset threshold includes: if a longest distance in a plurality of distances exceeds the preset threshold, determining that the target object is an abnormal sample. In this implementation, to better recognize an abnormal sample, in this implementation, whether the target object is an abnormal sample is determined based on the longest distance in the plurality of distances.

In a possible implementation, the feature extraction model is specifically obtained by updating the preset model by using the first loss value and a second loss value, the second loss value is determined based on a deviation between a target result and a real result of the training sample, the target result is determined based on a first prediction result and a preset function, the first prediction result is a prediction result of the preset model for the training sample, an input of the preset function is the first prediction result, an output of the preset function is the target result, and the output of the preset function is negatively correlated with the input of the preset function. In this implementation, the preset function is introduced in a model training process, and the input of the preset function is negatively correlated with the output of the preset function. Different outputs are selected based on different inputs of the preset function, no parameter needs to be manually adjusted, and different outputs can be automatically obtained based on different inputs. This prevents the model from being trapped in local optimization, reduces a convergence speed of the model, and makes performance of the trained model better.

In a possible implementation, the plurality of objects are obtained by performing disturbance processing on a same first image (the plurality of objects may be obtained by performing different disturbance processing on a same image), and the method further includes: if the distance exceeds the preset threshold, deleting the target object from the plurality of objects to obtain a plurality of updated objects, where the plurality of updated objects are used to obtain a saliency map of the first image. In this implementation, screening processing is performed on the plurality of objects, a plurality of disturbed objects that satisfy target data distribution are retained, and the saliency map of the first image is obtained by using the plurality of updated objects, thereby improving accuracy of the saliency map.

In a possible implementation, the plurality of objects are obtained by performing disturbance processing on a same first image (the plurality of objects may be obtained by performing different disturbance processing on a same image), and the method further includes: if the distance does not exceed the preset threshold, determining that the target object is a normal object; if the target object is an abnormal object, setting a weight of the target object to a first weight; if the target object is a normal object, setting the weight of the target object to a second weight, where the second weight is greater than the first weight; and processing the feature of the target object based on the first weight or the second weight to obtain a processed target object, where the processed target object is used to obtain a saliency map of the first image. In this implementation, a larger weight is set for a normal sample, and a smaller weight is set for an abnormal sample. In a process of generating the saliency map, the normal sample is mainly used, and the abnormal sample is used as a supplement, thereby weakening impact caused by the abnormal sample in the process of generating the saliency map. In this way, the generated saliency map can better reflect impact of the feature on the output of the model.

According to a third aspect, this application provides an apparatus for generating a saliency map. The apparatus includes: an obtaining module, configured to obtain a plurality of objects, where the plurality of objects are obtained by performing disturbance processing on a first object; a screening module, configured to perform, based on a first condition, screening processing on the plurality of objects obtained by the obtaining module, to obtain a plurality of updated objects, where the plurality of updated objects satisfy target data distribution, the target data distribution is obtained based on a training sample, and the training sample is used to train a preset model to obtain a target model; a prediction module, configured to input the plurality of updated objects obtained by the screening module into the target model, to output a first prediction result; and a generation module, configured to generate a saliency map of the first object based on the first prediction result obtained by the prediction module and the plurality of updated objects.

In a possible implementation, the target model is obtained by updating the preset model by using a first loss value, the first loss value is determined based on a deviation between a feature of the training sample and a weight vector of the preset model, and the feature of the training sample is obtained by performing feature extraction on the training sample by using the preset model. The screening module is specifically configured to: if the plurality of objects include a target object, delete the target object from the plurality of objects to obtain the plurality of updated objects, where a distance between a feature of the target object and a weight vector of the target model exceeds a preset threshold, and the feature of the target object is obtained by performing feature extraction on the target object by using the target model.

In a possible implementation, the feature of the target object is specifically extracted by using a first feature extraction layer, the first feature extraction layer is any one of a plurality of feature extraction layers in the target model, the distance between the feature of the target object and the weight vector of the target model is specifically a distance between the feature of the target object and a weight vector of a second feature extraction layer, and the second feature extraction layer is any one of the plurality of feature extraction layers.

In a possible implementation, the first feature extraction layer and the second feature extraction layer may be set to be a same feature extraction layer according to an actual application requirement, or the first feature extraction layer and the second feature extraction layer may be set to be different feature extraction layers according to an actual application requirement.

In a possible implementation, the first feature extraction layer is specifically a penultimate feature extraction layer in a plurality of feature extraction layers in a feature extraction model, the plurality of feature extraction layers are connected end-to-end, the target object is an input of the first feature extraction layer in the plurality of feature extraction layers, and the second feature extraction layer is specifically a last feature extraction layer in the plurality of feature extraction layers.

In a possible implementation, if there are a plurality of weight vectors of the second feature extraction layer, a distance between the feature of the target object and a target weight vector of the second feature extraction layer exceeds the preset threshold, the distance between the feature of the target object and the target weight vector of the second feature extraction layer is a longest distance in a plurality of distances, and the plurality of distances include a distance between the feature of the target object and each weight vector of the second feature extraction layer.

In a possible implementation, the target model is specifically obtained by updating the preset model by using the first loss value and a second loss value, the second loss value is determined based on a deviation between a target result and a real result of the training sample, the target result is determined based on a second prediction result and a preset function, the second prediction result is a prediction result of the preset model for the training sample, an input of the preset function is the second prediction result, an output of the preset function is the target result, and the output of the preset function is negatively correlated with the input of the preset function.

In a possible implementation, the apparatus further includes a weight module, where the weight module is configured to: set weights of the plurality of updated objects to a first weight; and set weights of a plurality of remaining objects to a second weight, where the plurality of remaining objects are objects other than the plurality of updated objects in the plurality of objects, and the first weight is greater than the second weight. The prediction module is specifically configured to input a first result and a second result into the target model, to output the first prediction result, where the first result is determined based on the first weight and the plurality of updated objects, and the second result is determined based on the second weight and the plurality of remaining objects.

For all of specific implementation steps of the third aspect and the possible implementations of this application and beneficial effects brought by the possible implementations, refer to descriptions in the possible implementations of the first aspect. Details are not described herein again.

According to a fourth aspect, this application provides an apparatus for detecting an abnormal object. The apparatus includes: a first obtaining module, configured to obtain a plurality of objects; a feature extraction module, configured to perform feature extraction on a target object by using a feature extraction model, to obtain a feature of the target object, where the target object is any one of the plurality of objects, the feature extraction model is obtained by updating a preset model by using a first loss value, the first loss value is determined based on a deviation between a feature of a training sample and a weight vector of the preset model, and the feature of the training sample is obtained by performing feature extraction on the training sample by using the preset model; a second obtaining module, configured to obtain a distance between the feature of the target object and a weight vector of the feature extraction model; and an anomaly detection module, configured to: when the distance exceeds a preset threshold, determine that the target object is an abnormal object.

In a possible implementation, the feature extraction module is specifically configured to perform feature extraction on the target object by using a first feature extraction layer, to obtain the feature of the target object, where the first feature extraction layer is any one of a plurality of feature extraction layers in the feature extraction model; and the obtaining a distance between the feature of the target object and a weight vector of the feature extraction model includes: obtaining a distance between the feature of the target object and a weight vector of a second feature extraction layer, where the second feature extraction layer is any one of the plurality of feature extraction layers.

In a possible implementation, the first feature extraction layer and the second feature extraction layer may be set to be a same feature extraction layer according to an actual application requirement, or the first feature extraction layer and the second feature extraction layer may be set to be different feature extraction layers according to an actual application requirement.

In a possible implementation, the first feature extraction layer is a penultimate feature extraction layer in the plurality of feature extraction layers in the feature extraction model, the plurality of feature extraction layers are connected end-to-end, the target object is an input of the first feature extraction layer in the plurality of feature extraction layers, and the second feature extraction layer is a last feature extraction layer in the plurality of feature extraction layers.

In a possible implementation, the second obtaining module is specifically configured to: if there are a plurality of weight vectors of the second feature extraction layer, obtain a distance between the feature of the target object and each weight vector of the second feature extraction layer. The anomaly detection module is specifically configured to: when a longest distance in a plurality of distances exceeds the preset threshold, determine that the target object is an abnormal sample.

In a possible implementation, the feature extraction model is specifically obtained by updating the preset model by using the first loss value and a second loss value, the second loss value is determined based on a deviation between a target result and a real result of the training sample, the target result is determined based on a first prediction result and a preset function, the first prediction result is a prediction result of the preset model for the training sample, an input of the preset function is the first prediction result, an output of the preset function is the target result, and the output of the preset function is negatively correlated with the input of the preset function.

In a possible implementation, the plurality of objects are obtained by performing disturbance processing on a same first image (the plurality of objects may be obtained by performing different disturbance processing on a same image), and the anomaly detection module is specifically configured to: if the distance exceeds the preset threshold, delete the target object from a plurality of disturbed first images to obtain a plurality of updated disturbed first images, where the plurality of updated disturbed first images are used to obtain a saliency map of the first image.

In a possible implementation, the plurality of objects are obtained by performing disturbance processing on a same first image (the plurality of objects may be obtained by performing different disturbance processing on a same image), and the apparatus further includes a weight module, where the anomaly detection module is further configured to: if the distance does not exceed the preset threshold, determine that the target object is a normal object; and the weight module is configured to: if the target object is an abnormal object, set a weight of the target object to a first weight; or if the target object is a normal object, set a weight of the target object to a second weight, where the second weight is greater than a first weight; and process the feature of the target object based on the first weight or the second weight to obtain a processed target object, where the processed target object is used to obtain a saliency map of the first image.

For all of specific implementation steps of the fourth aspect and the possible implementations of this application and beneficial effects brought by the possible implementations, refer to descriptions in the possible implementations of the second aspect. Details are not described herein again.

According to a fifth aspect, this application provides an apparatus for generating a saliency map. The apparatus includes a processor. The processor is coupled to a memory, the memory stores program instructions, and when the program instructions stored in the memory are executed by the processor, the method according to any one of the first aspect or the possible implementations of the first aspect is implemented.

For all of specific implementation steps of the fifth aspect and the possible implementations of this application and beneficial effects brought by the possible implementations, refer to descriptions in the possible implementations of the first aspect. Details are not described herein again.

According to a sixth aspect, this application provides an apparatus for detecting an abnormal object. The apparatus includes a processor. The processor is coupled to a memory, the memory stores program instructions. When the program instructions stored in the memory are executed by the processor, the method according to any one of the second aspect or the possible implementations of the second aspect is implemented.

For all of specific implementation steps of the sixth aspect and the possible implementations of this application and beneficial effects brought by the possible implementations, refer to descriptions in the possible implementations of the second aspect. Details are not described herein again.

According to a seventh aspect, this application provides a computer-readable storage medium, including a program. When the program runs on a computer, the computer is enabled to perform the method according to any one of the first aspect or the possible implementations of the first aspect, or the computer is enabled to perform the method according to any one of the second aspect or the possible implementations of the second aspect.

According to an eighth aspect, this application provides a circuit system. The circuit system includes a processing circuit. The processing circuit is configured to perform the method according to any one of the first aspect or the possible implementations of the first aspect, or configured to perform the method according to any one of the second aspect or the possible implementations of the second aspect.

According to a ninth aspect, this application provides a computer program product. The computer program product includes instructions. When the instructions are loaded and executed by an electronic device, the electronic device is enabled to perform the method according to any one of the first aspect or the possible implementations of the first aspect, or the electronic device is enabled to perform the method according to any one of the second aspect or the possible implementations of the second aspect.

According to a tenth aspect, this application provides a chip. The chip is coupled to a memory, and configured to execute a program stored in the memory, to perform the method according to any one of the first aspect or the possible implementations of the first aspect, or perform the method according to any one of the second aspect or the possible implementations of the second aspect.

For all of specific implementation steps of the seventh aspect to the tenth aspect and the possible implementations of this application and beneficial effects brought by the possible implementations, refer to descriptions in the possible implementations of the first aspect or the second aspect. Details are not described herein again.

**BRIEF DESCRIPTION OF DRAWINGS**

FIG. 1 is a schematic diagram of a structure of an artificial intelligence main framework;
FIG. 2 is a schematic flowchart of a disturbance-based explainable method;
FIG. 3 is a schematic flowchart of a method for generating a saliency map according to an embodiment of this application;
FIG. 4 is another schematic flowchart of a method for generating a saliency map according to an embodiment of this application;
FIG. 5 is a schematic flowchart of a model training method according to an embodiment of this application;
FIG. 6 is a schematic diagram of an application scenario of a model training method according to an embodiment of this application;
FIG. 7 is another schematic flowchart of a model training method according to an embodiment of this application;
FIG. 8 is a schematic flowchart for generating a saliency map according to an embodiment of this application;
FIG. 9 is a schematic flowchart for generating a saliency map according to an embodiment of this application;
FIG. 10 is a schematic diagram of an application scenario of a solution according to an embodiment of this application;
FIG. 11 is a schematic diagram of an application scenario of a solution according to an embodiment of this application;
FIG. 12 is an experimental effect diagram of a solution according to an embodiment of this application;
FIG. 13 is a schematic diagram of a system architecture according to an embodiment of this application;
FIG. 14 is a schematic diagram of an architecture of an execution device according to an embodiment of this application;
FIG. 15 is a schematic diagram of a structure of an apparatus for generating a saliency map according to an embodiment of this application;
FIG. 16 is a schematic diagram of a structure of an apparatus for detecting an abnormal object according to an embodiment of this application;
FIG. 17 is a schematic diagram of a structure of a training apparatus according to an embodiment of this application;
FIG. 18 is a schematic diagram of a structure of an execution device according to an embodiment of this application; and
FIG. 19 is a schematic diagram of a structure of a chip according to an embodiment of this application.

**DESCRIPTION OF EMBODIMENTS**

Embodiments of this application provide a method for generating a saliency map. Screening processing is performed on disturbed first objects, and after the screening processing is performed, updated disturbed first objects satisfy target data distribution, where the target data distribution is obtained based on data distribution of a training sample. Because a saliency map is generated by using disturbed first images that satisfy the target data distribution, the saliency map can accurately reflect impact of a feature on an output of a model, and an explanation of the model is more persuasive. This helps increase a degree of trust of a user in the model.

The following describes the embodiments of this application with reference to accompanying drawings. A person of ordinary skill in the art may know that, with development of technologies and emergence of a new scenario, the technical solutions provided in the embodiments of this application are also applicable to similar technical problems.

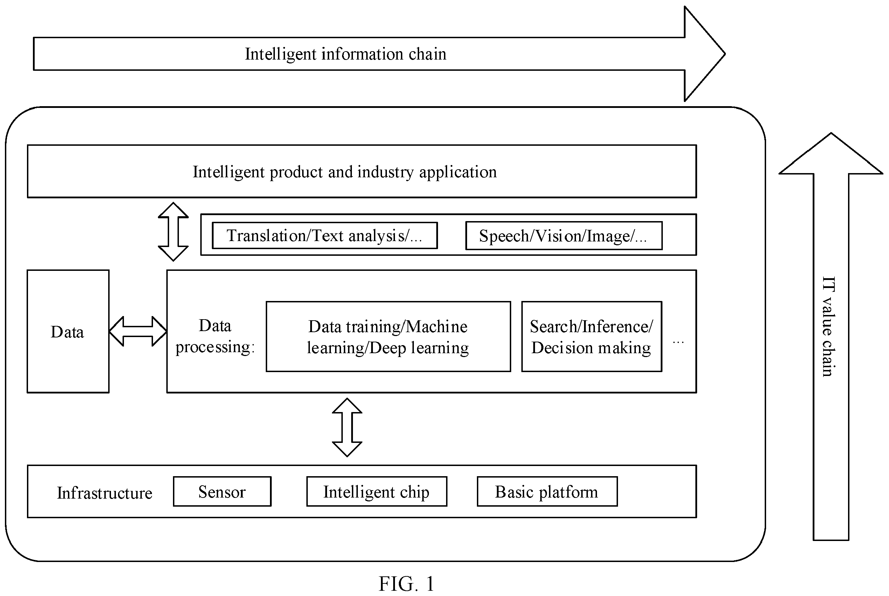

An overall working procedure of an artificial intelligence system is first described. FIG. 1 is a schematic diagram of a structure of an artificial intelligence main framework. The following describes the artificial intelligence main framework from two dimensions: an "intelligent information chain" (horizontal axis) and an "IT value chain" (vertical axis). The "intelligent information chain" reflects a series of processes from obtaining data to processing the data. For example, the process may be a general process of intelligent information perception, intelligent information representation and formation, intelligent inference, intelligent decision making, and intelligent execution and output. In this process, the data undergoes a refinement process of "data-information-knowledge-intelligence". The "IT value chain" reflects a value brought by artificial intelligence to the information technology industry from an underlying infrastructure and information (technology providing and processing implementation) of human intelligence to an industrial ecological process of a system.

(1) Infrastructure

The infrastructure provides computing capability support for the artificial intelligence system, implements communication with the external world, and implements support by using a basic platform. The infrastructure communicates with the outside by using a sensor. A computing capability is provided by an intelligent chip. For example, the intelligent chip includes a hardware acceleration chip such as a central processing unit (central processing unit, CPU), a neural-network processing unit (neural-network processing unit, NPU), a graphics processing unit (graphics processing unit, GPU), an application-specific integrated circuit (application-specific integrated circuit, ASIC), or a field programmable gate array (field programmable gate array, FPGA). The basic platform includes related platforms, for example, a distributed computing framework and a network, for assurance and support, including cloud storage and computing, an interconnection network, and the like. For example, the sensor communicates with the outside to obtain data, and the data is provided to an intelligent chip in a distributed computing system provided by the basic platform for computing.

(2) Data

Data at an upper layer of the infrastructure indicates a data source in the field of artificial intelligence. The data relates to a graph, an image, a speech, and a text, further relates to Internet of Things data of a conventional device, and includes service data of an existing system and perception data such as force, displacement, a liquid level, a temperature, and humidity.

(3) Data processing

Data processing usually includes data training, machine learning, deep learning, searching, inference, decision making, and the like.
Machine learning and deep learning may mean performing symbolic and formal intelligent information modeling, extraction, preprocessing, training, and the like on data.
Inference is a process in which human intelligent inference is simulated in a computer or an intelligent system, and machine thinking and problem resolving are performed by using formal information according to an inference control policy. A typical function is searching and matching.
Decision making is a process of making a decision after intelligent information is inferred, and usually provides functions such as classification, ranking, and prediction.

(4) General capability

After data processing mentioned above is performed on data, some general capabilities, for example, an algorithm or a general system, such as image classification, personalized image management, personalized battery charging management, text analysis, computer vision processing, or speech recognition, may be further formed based on a data processing result.

(5) Intelligent product and industry application

The intelligent product and the industry application are a product and an application of the artificial intelligence system in various fields, and are package of an overall solution of the artificial intelligence, so that decision making for intelligent information is productized and that the application is implemented. Application fields thereof mainly include an intelligent terminal, intelligent manufacturing, intelligent transportation, a smart home, intelligent health care, intelligent security protection, autonomous driving, a smart city, and the like.
The embodiments of this application may be applied to a scenario in which a saliency map (saliency map) needs to be obtained in the foregoing various fields.
A saliency map is an image that shows uniqueness of each pixel. A goal of the saliency map is to simplify or change representation of a general image to a style that is analyzed more easily. For example, a pixel has a higher contribution value in a label of a picture, and the pixel is displayed in a more striking manner in a saliency map.
For better understanding of this application scenario, the following describes an explainable algorithm of a model. Currently, there are two types of explainable algorithms: One is a gradient-based explainable method and the other is a disturbance-based explainable method. In the disturbance-based explainable method, an explanation module is decoupled from the model, and is more universal. Currently, the method is more widely applied.

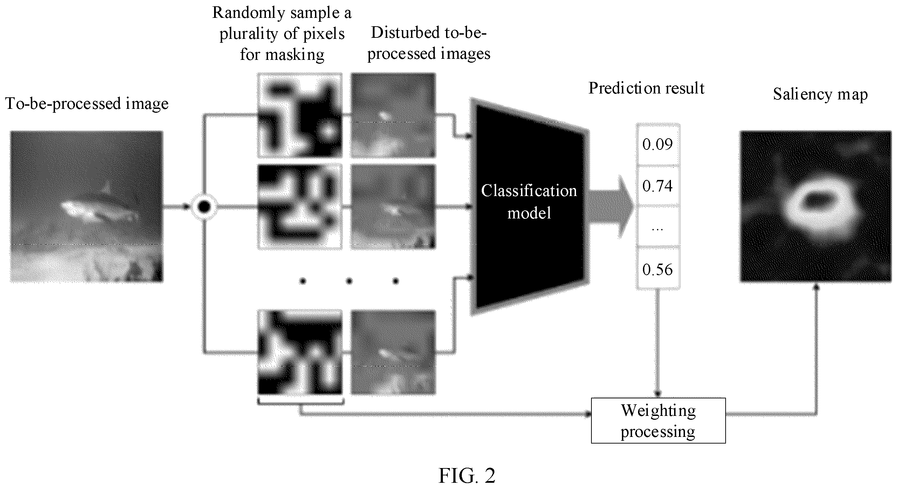

FIG. 2 is a schematic flowchart of a disturbance-based explainable method. As shown in FIG. 2, an example in which a first object is an image is used for description. The disturbance-based explainable method may include the following steps: First, disturbance processing is performed on a to-be-processed picture (image), and a plurality of pixels are randomly sampled from the to-be-processed picture for masking (mask), so that a disturbed first image is obtained. Disturbance processing may be performed on the to-be-processed picture in a plurality of manners. For example, blurring processing may be performed on the first image, transparency processing may be performed on the first image, or noise addition processing may be performed on the first image. Then the disturbed first image is input into the model, so that the model predicts the first image to obtain a prediction result. The model may be a model for performing any task. For example, the model may be a model for performing an image classification task, or may be a model for performing an image segmentation task. This is not limited in this embodiment of this application. Then linear weighting processing is performed on features of the disturbed first image to obtain a saliency map of the first image, where corresponding weights are determined based on the prediction result. An example in which the model is a model for performing a classification task is used for description. It is assumed that image features corresponding to a disturbed region include M1 and M2, where a disturbed image corresponding to M1 is I1, and a disturbed image corresponding to M2 is I2. Assuming that a probability that the classification model correctly predicts I1 is P1 and that a probability that the classification model correctly predicts I2 is P2, linear weighting processing is performed on the prediction result and disturbed image features, that is, I1*P1+I2*P2. The result is used to represent the saliency map of the first image.

Which features have greatest impact on an output of the model can be easily observed by using the saliency map. For ease of understanding, the following uses a specific example to describe how to explain a model by using a saliency map. It is assumed that the first image is an image including a cat, and the first image is disturbed. For example, a disturbed image I1 is obtained by disturbing an eye region (M1) of the cat; a disturbed image I2 is obtained by disturbing a mouth region (M2) of the cat; and a disturbed image I3 is obtained by disturbing a tail region (M3) of the cat. It is assumed that a probability that the classification model predicts that I1 is a cat is 0.3 for I1, and a probability that the classification model predicts that I2 is a cat is 0.6 for I2, and a probability that the classification model predicts that I3 is a cat is 0.1 for I3. It can be learned that, after the tail region M3 of the cat is disturbed, a probability that the model predicts that the first object is a cat is lowest, indicating that a feature of the tail region M3 of the cat has greatest impact on an output of the model. A result represented by 0.3*I1+0.6*I2+0.1*I3 is used to obtain the saliency map.

However, the applicant finds that the current disturbance-based explainable method has a great disadvantage, that is, after disturbance processing is performed on the first object, data distribution of a plurality of obtained disturbed first images may be inconsistent with data distribution of a training sample used during model training, and this affects accuracy and reliability of the model explanation. It should be noted that researchers in the explainable artificial intelligence (explainable artificial intelligence, XAI) field cannot easily realize this problem (the problem belongs to knowledge of the probability field), and consequently, all current disturbance-based explainable methods have this disadvantage. The applicant finds this problem and proposes a specific improvement manner. To better demonstrate this disadvantage, the following provides descriptions with reference to a formula 1-1.

$$p(y \mid d, x) = \frac{p(y, d \mid x)}{p(d \mid x)} \qquad (1\text{-}1)$$

In the formula, y represents a prediction result, and using the classification model as an example, y indicates a category; d indicates a training sample that satisfies target data distribution (data distribution that the training sample satisfies is referred to as the target data distribution); x indicates a disturbed first image (also referred to as a disturbed sample or a disturbed image in this application for short, both of which have the same meaning); $p(y \mid d, x)$ indicates a probability that x satisfies the target data distribution and x belongs to y; a calculation process of $p(y \mid d, x)$ may be represented by using the formula 1-1; and $p(y, d \mid x)$ indicates a probability that x satisfies the target data distribution and data satisfying the target data distribution is predicted as y, and $p(d \mid x)$ indicates a probability that x belongs to the target data distribution. When x is an abnormal sample, that is, when x does not satisfy the target data distribution, the probability that x belongs to y should be very small. This is because the classification model is trained by using a training sample, and the trained model can predict an input only based on learned knowledge, that is, an input of the trained model should be consistent with data distribution of the training sample. Therefore, when the input x does not satisfy the target data distribution (x that does not satisfy the target data distribution is hereinafter referred to as an abnormal sample x), the abnormal sample x may not belong to any preset category (including y), that is, a probability that the abnormal sample x belongs to y is very low. However, in an actual situation, a probability that the model predicts that the abnormal sample x is y is very high. With reference to the foregoing formula 1-1, when x is an abnormal sample, a value of $p(y, d \mid x)$ is very small. Assuming that the value of $p(y, d \mid x)$ is 0.09, a value of $p(d \mid x)$ is also very small. Assuming that the value of $p(d \mid x)$ is 0.1, a ratio of the two is 0.9, that is, the value of $p(y \mid d, x)$ is 0.9, which indicates that a probability that the model predicts that the abnormal sample belongs to y is very high. It can be learned from the foregoing analysis that, when the input x does not satisfy the target data distribution, there is a very high probability that the model performs classification incorrectly. Because determining of the saliency map is closely related to a classification result, an error of the classification result makes the saliency map unable to accurately reflect impact of a feature on the output of the model, and this severely affects a degree of trust of a user in the model.

For the problem found above, this application provides a method for generating a saliency map. Screening processing is performed on disturbed first images, and data distribution of screened disturbed first images is consistent with data distribution of a training sample. Because a saliency map is generated by using the screened disturbed first images, the saliency map can accurately reflect impact of a feature on an output of a model, and an explanation of the model is more persuasive. This helps increase a degree of trust of a user in the model. The solutions provided in this application are hereinafter described reference to specific embodiments.

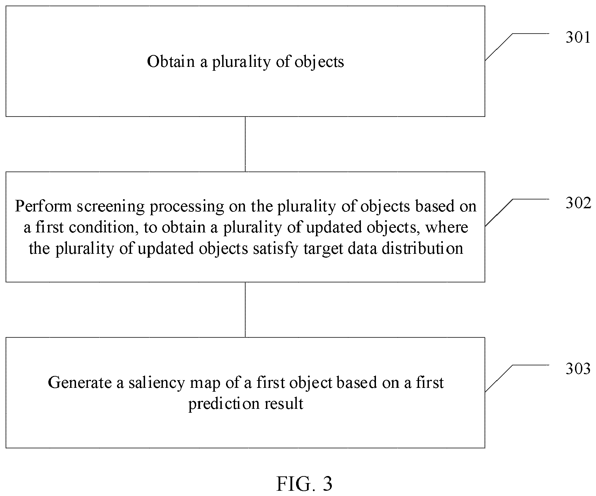

FIG. 3 is a schematic flowchart of a method for generating a saliency map according to an embodiment of this application. The method may include the following steps.

301. Obtain a plurality of objects.

The plurality of objects are obtained by performing disturbance processing on a first object.

Disturbance processing may be performed on the first object in a plurality of manners For example, noise addition processing may be performed on the first object; or blurring processing may be performed on the first object (for example, values of a plurality of pixels are changed within a preset range); or masking processing may be performed on the first object (for example, a plurality of pixels are randomly sampled for masking). A disturbance manner is not limited in this embodiment of this application, and a purpose of disturbance is to cause some regions of the first object after the disturbance to be different from some regions of the first object before the disturbance.

The plurality of objects may be image data, voice data, text data, or the like. This is not limited in this embodiment of this application. When the plurality of objects are image data, the solution provided in this application can improve explainability of a model whose input is image data, for example, improve explainability of an image classification model, to better understand which feature of an image input into the image classification model has great impact on an output of the image classification model. When the plurality of objects are voice data, the solution provided in this application can improve explainability of a model whose input is voice data, for example, improve explainability of a multi-round dialog model, and better explain which feature of an input voice is a basis for the multi-round dialog model to interact with a user. When the plurality of objects are text data, the solution provided in this application can improve explainability of a model whose input is text data, for example, improve explainability of machine translation, to better understand which feature of an input text has great impact on an output of a translation model.

In a preferred implementation, the plurality of objects are obtained by performing disturbance processing on a medical image (for example, a CT image, a type-B ultrasonic image, or a nuclear magnetic resonance image). In another preferred implementation, the plurality of objects are obtained by performing disturbance processing on a traffic image (for example, an image obtained by using an in-vehicle camera).

302. Perform screening processing on the plurality of objects based on a first condition, to obtain a plurality of updated objects, where the plurality of updated objects satisfy target data distribution.

The target data distribution is obtained based on data distribution of a training sample, and the training sample is used to train a preset model to obtain a target model.

According to the solution provided in this application, it is found that the plurality of objects obtained by performing disturbance processing on the first object may not satisfy the target data distribution, and this affects accuracy and reliability of a model explanation. It is assumed that training samples include an image 1, an image 2, an image 3, and an image 4, and that target data distribution is obtained based on these training samples. An input of a trained model should also satisfy the target data distribution. Otherwise, accuracy of a prediction result of the trained model for the input is greatly reduced. Herein, an example is used for explanation. It is assumed that all training samples are images of animals, and that the images of these animals satisfy target data distribution. An input of the trained model should also satisfy the target data distribution. For example, if the input is also an image of an animal (the model has learned a feature of the input), the trained model can accurately predict the input. However, if the input is an image of a person or an image of an animal not learned by the model, accuracy of a prediction result of the trained model for the input is greatly reduced. According to the solution provided in this application, it is found that the disturbed first objects may not satisfy the target data distribution. Therefore, screening processing is performed on the disturbed first objects, to retain disturbed first objects that satisfy the target data distribution. The disturbed first objects that satisfy the target data distribution are used as an input of the model, to improve prediction accuracy of the model.

In the solution provided in this application, screening processing may be performed on a plurality of objects in a plurality of manners. The following provides several specific screening manners.

In a possible implementation, the plurality of objects may be used as an input of the classification model. The classification model is obtained by training an initial classification model by using a training sample, and the trained classification model may be used to recognize an abnormal sample. An output of the classification model is used as an input of a first preset function. If an output value of the first preset function is greater than a first preset threshold, it is considered that the object is a normal sample. If the output value of the first preset function is not greater than the first preset threshold, it is considered that the object is an abnormal sample. The output of the first preset function is positively correlated with the input of the first preset function. A set of normal samples is a plurality of updated objects.

In a possible implementation, the plurality of objects may be used as an input of a reconstruction model (auto encoder), and reconstruction processing is performed on the plurality of objects by using the reconstruction model, so that data distribution of the plurality of reconstructed objects satisfies the target data distribution. A deviation between each object before the reconstruction and the object after the reconstruction is obtained, objects whose deviations do not exceed a preset threshold are screened out, and the plurality of updated objects include the objects corresponding to the deviations that do not exceed the preset threshold. It should be noted that in an implementation of this application, a plurality of preset thresholds may be set. For example, the preset threshold in this implementation may be different from the preset threshold in the implementation described in the previous paragraph. This is not repeated later.

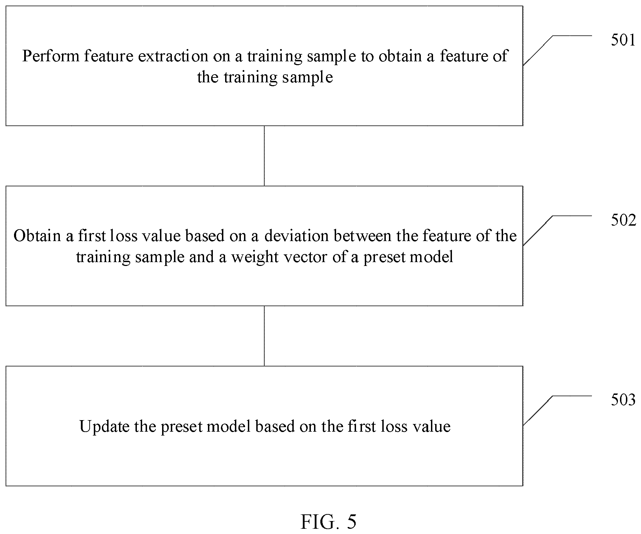

In a preferred implementation, a target object is deleted from the plurality of objects, so that the plurality of updated objects are obtained. A distance between a feature of the target object and a weight vector of the target model exceeds a preset threshold, and the feature of the target object is obtained by performing feature extraction on the target object by using the target model. The target model is obtained by updating the preset model by using a first loss value, the first loss value is determined based on a deviation between a feature of the training sample and a weight vector of the preset model, and the feature of the training sample is obtained by performing feature extraction on the training sample by using the preset model. In this implementation, in an iterative training process of the target model, the preset model is updated by using the first loss value, so that the weight vector of the preset model may be closer to the feature of the training sample. A weight vector of the trained preset model, that is, the target model, may reflect distribution of the training sample. Therefore, it can be determined, by comparing a distance between an object input into the target model and the weight vector of the target model, whether the object input into the target model satisfies the target data distribution. This implementation of deleting the target object is described in detail in the following embodiment corresponding to FIG. 5.

In this application, other objects than the plurality of updated objects in the plurality of objects are referred to as abnormal objects or abnormal samples. For example, in the several implementations mentioned in step 302, an object corresponding to a maximum probability that does not exceed a preset threshold is referred to as an abnormal sample, an object corresponding to a deviation that exceeds a preset threshold is referred to as an abnormal sample, and the target object is referred to as an abnormal sample. In this application, each of the plurality of updated objects is also referred to as a normal sample (or a normal object).

303. Generate a saliency map of the first object based on a first prediction result.

In a possible implementation, the plurality of updated objects may be input into the target model, so that the first prediction result is output, and the saliency map of the first object is generated based on the first prediction result. For example, it is assumed that the first object is a first image 1. After step 301 is performed, a plurality of disturbed first images may be obtained for the first image 1. For example, the plurality of disturbed first images include a disturbed image 1, a disturbed image 2, a disturbed image 3, a disturbed image 4, and a disturbed image 5. After step 302 is performed, a plurality of updated objects are obtained. For example, the plurality of updated objects include a disturbed image 1, a disturbed image 2, and a disturbed image 3. To be specific, the disturbed image 1, the disturbed image 2, and the disturbed image 3 that are obtained by performing step 302 are normal samples, and the disturbed image 4 and the disturbed image 5 are abnormal samples. In this implementation, the disturbed image 1, the disturbed image 2, and the disturbed image 3 may be used as an input of the target model, to output the first prediction result. The disturbed image 4 and the disturbed image 5 are removed from the plurality of objects, and are no longer used as an input of the target model. Weighting processing is performed on the disturbed image 1, the disturbed image 2, and the disturbed image 3 to obtain a saliency map of the first image. Weights of the disturbed image 1, the disturbed image 2, and the disturbed image 3 are determined based on the first prediction result. Specifically, the weight of the disturbed image 1 is determined based on a prediction result of the target model for the disturbed image 1. Specifically, the weight of the disturbed image 2 is determined based on a prediction result of the target model for the disturbed image 2. Specifically, the weight of the disturbed image 3 is determined based on a prediction result of the target model for the disturbed image 3. In this implementation, only a normal sample is used as an input of the target model, and a saliency map is obtained based on only the normal sample, so that performance of the saliency map is improved, and that the generated saliency map can accurately reflect impact of a feature on an output of the model.

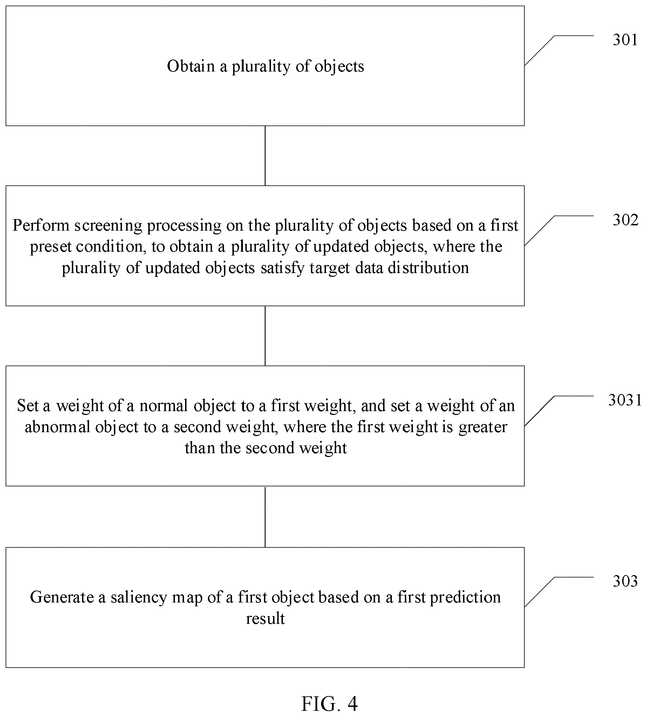

In a possible implementation, referring to FIG. 4, the method may further include step 3031: Set a weight of a normal object to a first weight, and set a weight of an abnormal object to a second weight, where the first weight is greater than the second weight. In this implementation, after the normal object and the abnormal object are screened out, different weights are set for the normal object and the abnormal object, and the weight of the normal object is greater than the weight of the abnormal object. It should be noted that weights of all normal objects may be the same or different, and that weights of all abnormal objects may be the same or different. In addition, a weight of any normal object is greater than that of any abnormal object. In this implementation, the normal object is processed by using the first weight, so that a processed normal object is obtained, and the abnormal object is processed by using the second weight, so that a processed abnormal object is obtained. Both the processed normal object and the processed abnormal object are used as an input of the target model, to obtain the first prediction result, and weighting processing is performed on the processed normal object and the processed abnormal object based on the first prediction result, to obtain the saliency map of the first object. For example, it is assumed that the first object is a first image 1. After step 301 is performed, a plurality of disturbed first images may be obtained for the first image 1. For example, the plurality of disturbed first images include a disturbed image 1, a disturbed image 2, a disturbed image 3, a disturbed image 4, and a disturbed image 5. After step 302 is performed, a plurality of updated objects are obtained. For example, the plurality of updated objects include a disturbed image 1, a disturbed image 2, and a disturbed image 3. To be specific, the disturbed image 1, the disturbed image 2, and the disturbed image 3 that are obtained by performing step 302 are normal samples, and the disturbed image 4 and the disturbed image 5 are abnormal samples. In this implementation, a weight is set for each disturbed image. Assuming that a weight of a normal sample is set to 0.9 and that a weight of an abnormal sample is set to 0.1, that is, weights corresponding to the disturbed image 1, the disturbed image 2, and the disturbed image 3 are set to 0.9, and weights corresponding to the disturbed image 4 and the disturbed image 5 are set to 0.1, the disturbed images are processed by using the weights. A processed disturbed image 1 may be considered as a 0.9*disturbed image 1, a processed disturbed image 2 may be considered as a 0.9*disturbed image 2, and a processed disturbed image 3 may be considered as a 0.9*disturbed image 3. A processed disturbed image 4 may be considered as a 0.1*disturbed image 4, and a processed disturbed image 5 may be considered as a 0.1disturbed image 5. The processed disturbed images are all used as an input of the target model. To be specific, the 0.9*disturbed image 1, the 0.9*disturbed image 2, the 0.9*disturbed image 3, the 0.1 *disturbed image 4, and the 0.1 *disturbed image 5 are all used as the input of the target model, to output the first prediction result. Weighting processing is performed on the processed disturbed image 1, the processed disturbed image 2, and the processed disturbed image 3 to obtain a saliency map of the first image, where weights of the processed disturbed image 1, the processed disturbed image 2, and the processed disturbed image 3 are determined based on the first prediction result. Specifically, the weight of the processed disturbed image 1 is determined based on a prediction result of the target model for the processed disturbed image 1. Specifically, the weight of the processed disturbed image 2 is determined based on a prediction result of the target model for the processed disturbed image 2. Specifically, the weight of the processed disturbed image 3 is determined based on a prediction result of the target model for the processed disturbed image 3. In this implementation, a larger weight is set for a normal sample, and a smaller weight is set for an abnormal sample. In a process of generating the saliency map, the normal sample is mainly used, and the abnormal sample is used as a supplement, thereby weakening impact caused by the abnormal sample in the process of generating the saliency map. In this way, the generated saliency map can better reflect impact of the feature on the output of the model.

As can be learned from the foregoing description of the embodiment corresponding to FIG. 3, screening processing is performed on the disturbed first images, and data distribution of the screened disturbed first images is consistent with the data distribution of the training sample. Because the saliency map is generated by using the screened disturbed first images, the saliency map can accurately reflect impact of the feature on the output of the model, and the explanation of the model is more persuasive. This helps increase a degree of trust of the user in the model.

When the embodiment corresponding to FIG. 3 is described, a method for screening an abnormal sample is mentioned in step 302. The following describes this manner in detail with reference to FIG. 5. It should be noted that the implementation corresponding to FIG. 5 may be combined with the implementation corresponding to FIG. 3, or the implementation corresponding to FIG. 5 may be used as an independent implementation. When the implementation corresponding to FIG. 5 is used as an independent implementation, the implementation corresponding to FIG. 5 may be applied to an application scenario in which an abnormal sample needs to be detected. The following describes a possible application scenario of the implementation corresponding to FIG. 5. In an example, a user frequently receives financial SMS messages. Some financial SMS messages are from a bank, and these SMS messages are useful to the user and may be used to notify the user of an account balance change. Some financial SMS messages are fraudulent SMS messages. If the user trusts these SMS messages by mistake, for example, taps a hyperlink carried in these fraudulent SMS messages or contacts a fraudster, the user may suffer a financial loss. In this scenario, there is a problem of how to recognize a fraudulent SMS message. According to the solution provided in this application, financial fraudulent SMS messages can be effectively screened out, and the financial fraudulent SMS messages that are screened out are not displayed to the user, thereby avoiding a loss caused to the user due to trusting the fraudulent SMS messages by mistake. In another example, when a medical image (for example, a CT image, a type-B ultrasonic image, or a nuclear magnetic resonance image) is diagnosed by using AI, normal medical images and abnormal medical images need to be recognized from a large quantity of medical images. An abnormal medical image indicates that a patient corresponding to the medical image may have a disease. In this scenario, according to the solution provided in this application, efficiency of diagnosing a disease by using a model can be effectively improved. In another example, fault detection needs to be performed in industrial manufacturing. For example, a mine temperature needs to be collected, and an alarm is sent when the mine temperature is abnormal. In this scenario, whether the mine temperature is abnormal needs to be recognized based on the collected mine temperature. According to the solution provided in this application, whether the mine temperature is abnormal can be effectively recognized, and an alarm is sent in time, to avoid a danger. In another example, it is expected that an abnormal transaction operation is detected from a large quantity of transaction operation samples, to prevent a fraudulent transaction in advance. In another example, it is expected that abnormal access is detected from samples of network access, to detect insecure access, for example, a hacker attack. In another example, it is expected that an abnormal account is detected from user accounts that perform various operations, to lock an account that is suspected of performing a high-risk operation (a fraudulent transaction, a false transaction such as brushing, or a network attack).

Particularity of the problem of abnormal sample detection brings a great challenge to the classification model. A purpose of abnormal sample detection is to distinguish a normal sample from an abnormal sample. However, in abnormal sample detection, different from a conventional classification model, abnormal samples occur at a relatively low frequency. As a result, it is difficult to collect sufficient abnormal samples to train the classification model. According to the solution provided in this application, the classification model needs to be trained only by using a normal sample, so that the classification model can distinguish between a normal sample and an abnormal sample, thereby reducing training difficulty in training the classification model and training costs of training the classification model, and further improving performance of the classification model. The following describes a model training method provided in an embodiment of this application and abnormal object detection performed by applying a trained model.

FIG. 5 is a schematic flowchart of a model training method according to an embodiment of this application. The method may include the following steps.

501. Perform feature extraction on a training sample to obtain a feature of the training sample.

A data type of the training sample is not limited in this application, and may be image data, voice data, text data, or the like. When the training sample is image data, a trained model may be used to predict the image data. Specifically, the trained model may recognize an abnormal image from a plurality of to-be-detected images, for example, detect a medical image. When the training sample is voice data, a trained model may be used to predict voice data. Specifically, the trained model may recognize abnormal voice data from a plurality of pieces of to-be-detected voice data. For another example, when the training sample is text data, a trained model may be used to predict the text data, to recognize abnormal text data from a plurality of pieces of to-be-detected text data, for example, recognize a financial fraudulent SMS message.

In this application, feature extraction is performed on the training sample by using a preset model. Specifically, feature extraction is performed on the training sample by using a feature extraction model (or a feature extraction module) of the preset model. The preset model may predict the training sample based on a feature of the training sample that is extracted by the feature extraction model, and the preset model is updated based on a deviation between a prediction result and an actual result of the training sample, so that a prediction result of an updated preset model for the training sample may be closer to the actual result. The preset model may perform a plurality of types of prediction based on the feature of the training sample that is extracted by the feature extraction model, for example, predicting a category of the training sample, and predicting a region in which a target object in the training sample is located.

The feature extraction model includes a plurality of feature extraction layers that are connected end-to-end, an output of a previous feature extraction layer is used as an input of a next feature extraction layer, and an input of a first feature extraction layer is the training sample. Work at each layer of the feature extraction model may be described by using a mathematical expression $\vec{y} = a(W\vec{x} + b)$. From a physical layer, work at each layer of a deep neural network may be understood as completing transformation from input space to output space (that is, from row space to column space of a matrix) by performing five operations on the input space (a set of input vectors). The five operations include: 1. dimension increasing or dimension reduction; 2. scaling up/down; 3. rotation; 4. translation; and 5. "bending". The operation 1, the operation 2, and the operation 3 are performed by $W\vec{x}$, the operation 4 is performed by $+b$, and the operation 5 is performed by. The word "space" is used herein for expression because a classified object is not a single thing, but a type of thing. Space is a set of all individuals of this type of thing. $W$ is a weight vector, and each value in the vector indicates a weight value of one neuron at this layer of the neural network. The vector determines space transformation from the input space to the output space described above. In other words, a weight at each layer controls how to transform space. A purpose of training the preset model is to finally obtain a weight matrix (a weight matrix formed by vectors at a plurality of layers) at all layers of a trained preset model. Therefore, the training process of the preset model is essentially a manner of learning control of space transformation, and more specifically, learning a weight matrix.

It is expected that an output of the preset model is as close as possible to a predicted value that is really desired. The predicted value that is really desired is related to a training goal of the preset model or a task that needs to be completed by the preset model. For example, if the preset model is used to perform an image classification task, the output of the preset model is as close as possible to a real image classification result. To make the output of the preset model as close as possible to the predicted value that is really desired, a current predicted value of the network may be compared with a target value that is really desired, and then a weight vector at each layer of the neural network is updated based on a difference between the current predicted value and the target value (certainly, there is usually an initialization process before the first update, that is, a parameter is preconfigured for each layer of the deep neural network). For example, if the predicted value of the network is large, the weight vector is adjusted to reduce the predicted value until the neural network can predict the target value that is really desired. Therefore, "how to obtain, through comparison, a difference between the predicted value and the target value" needs to be predefined. This is a loss function (loss function) or an objective function (objective function). The loss function and the objective function are important equations that measure the difference between the predicted value and the target value. The loss function is used as an example. A higher output value (loss) of the loss function indicates a larger difference. Therefore, training of the preset model is a process of minimizing the loss as much as possible.

502. Obtain a first loss value based on a deviation between the feature of the training sample and the weight vector of the preset model.

The training process described in step 501 is to reduce a loss as much as possible. The loss in the solution provided in this application includes the first loss value. As the preset model is trained, the first loss value becomes smaller, and the weight vector of the preset model is closer to the feature of the training sample. A weight vector of a trained preset model, that is, a target model, can already reflect a data distribution feature of the training sample. In the solution provided in this application, the first loss value may be obtained in a plurality of manners. The following describes possible implementations.

In a possible implementation, a feature extracted by using any feature extraction layer of the preset model may be used as the feature of the training sample in step 502, and a weight vector of any feature extraction layer of the preset model may be used as the weight vector of the preset model in step 502. For example, feature extraction is performed on the training sample by using the first feature extraction layer (a feature obtained by performing feature extraction on the training sample by using the first feature extraction layer is hereinafter referred to as a first feature), and the first feature extraction layer may be any one of the plurality of feature extraction layers. The weight vector of the preset model may be a weight vector of a second feature extraction layer (the weight vector of the second feature extraction layer is hereinafter referred to as a first weight vector), and the second feature extraction layer may be any one of the plurality of feature extraction layers. The first loss value may be obtained by using a deviation between the first feature and the first weight vector.

In a possible implementation, the first feature extraction layer and the second feature extraction layer are a same feature extraction layer.

In a possible implementation, the first feature extraction layer and the second feature extraction layer are different feature extraction layers. In a preferred implementation, the first feature extraction layer is a penultimate feature extraction layer in the plurality of feature extraction layers in the feature extraction model, the plurality of feature extraction layers are connected end-to-end, the training sample is an input of the first feature extraction layer in the plurality of feature extraction layers, and the second feature extraction layer is a last feature extraction layer in the plurality of feature extraction layers.

In a possible implementation, the weight vector of the preset model may be a result obtained by performing weighting processing on weight vectors of a plurality of feature extraction layers. For example, weighting processing is performed on weight vectors of all feature extraction layers, and it is considered that a result of the weighting processing is the weight vector of the preset model. For another example, weighting processing may be performed on the weight vector of the first feature extraction layer and the weight vector of the second feature extraction layer, and it is considered that a result is the weight vector of the preset model.

In a possible implementation, each feature extraction layer may include a plurality of weight vectors. In this case, after feature extraction is performed on one training sample by using each feature extraction layer, a plurality of features of the training sample may be obtained. In this case, a plurality of first loss values may be obtained based on a deviation between each feature and each weight vector, and the preset model may be updated by using the plurality of first loss values, so that each weight vector may be closer to each feature. For example, it is assumed that the first feature extraction layer includes a weight vector 1, a weight vector 2, and a weight vector 3. Feature extraction is performed on the input training sample based on the weight vector 1, to obtain a feature 1; feature extraction is performed on the input training sample based on the weight vector 2, to obtain a feature 2; and feature extraction is performed on the input training sample based on the weight vector 3, to obtain a feature 3. A loss value 1 may be obtained based on a deviation between the weight vector 1 and the feature 1, a loss value 2 may be obtained based on a deviation between the weight vector 2 and the feature 2, and a loss value 3 may be obtained based on a deviation between the weight vector 3 and the feature 3. The first loss values include the loss value 1, the loss value 2, and the loss value 3. A process of updating the preset model by using the first loss values is also a process of continuously decreasing the loss value 1, the loss value 2, and the loss value 3, to make the weight vector 1 closer to the feature 1, the weight vector 2 closer to the feature 2, and the weight vector 3 closer to the feature 3. When the target model is a classification model, an example is still used for description. It is assumed that preset categories include a dog, a cat, and a rabbit. The feature 1 extracted by using the weight vector 1 focuses more on a feature of a dog in the input training sample, the feature 2 extracted by using the weight vector 2 focuses more on a feature of a cat in the input training sample, and the feature 3 extracted by using the weight vector 3 focuses more on a feature of a rabbit in the input training sample. In a process of training the preset model, as the loss value 1 continuously decreases, the weight vector 1 can better reflect the feature of the dog. The weight vector 1 of the target model may be considered as a category center of the dog category, where the category center may be used to represent a typical feature of the dog category. The weight vector 2 of the target model may be considered as a category center of the cat category, where the category center may be used to represent a typical feature of the cat category. The weight vector 3 of the target model may be considered as a category center of the rabbit category, where the category center may be used to represent a typical feature of the rabbit category.

503. Update the preset model based on the first loss value.

The preset model is updated by using the first loss value obtained in step 502, and step 501 to step 503 are repeatedly performed until a preset stop condition is satisfied. It may be understood that the preset stop condition is that the preset model has converged, or that a quantity of times of iterative training has reached a preset quantity of times.

Step 501 to step 503 are performed to train the preset model, to obtain the trained preset model, that is, the target model. The target model can be used to recognize a normal sample and an abnormal sample.

As can be learned from the embodiment corresponding to FIG. 5, the preset model is trained by using the solution provided in this application, and in the training process, only a normal sample needs to be used as training data, and an abnormal sample does not need to be used. Because a feature of a normal sample is obtained more easily than a feature of an abnormal sample, difficulty in model training can be greatly reduced, and costs of model training can be reduced. In the model training process, the preset model is updated by using the first loss value. As the preset model is trained, the first loss value becomes smaller, and the weight vector of the preset model is closer to the feature of the training sample. The weight vector of the trained preset model, that is, the target model, can already reflect the data distribution feature of the training sample. In an inference phase, an object is input into the target model, and a distance between the weight vector of the target model and a feature of the input object is compared. In this way, whether the input object is an abnormal sample can be determined.

In a possible implementation, a plurality of objects are obtained; and feature extraction is performed on a target object by using the target model, to obtain a feature of the target object, where the target object is any one of the plurality of objects. The target model herein is the target model described in the embodiment corresponding to FIG. 5. A distance between the feature of the target object and the weight vector of the target model is obtained. If the distance exceeds a preset threshold, it is determined that the target object is an abnormal object.

In a possible implementation, feature extraction is performed on the target object by using a first feature extraction layer, to obtain the feature of the target object, where the first feature extraction layer is any one of a plurality of feature extraction layers in the target model.

A distance between the feature of the target object and a weight vector of a second feature extraction layer is obtained, where the second feature extraction layer is any one of the plurality of feature extraction layers.

In a possible implementation, the first feature extraction layer and the second feature extraction layer are a same feature extraction layer or different feature extraction layers.

In a possible implementation, the first feature extraction layer is a penultimate feature extraction layer in the plurality of feature extraction layers in the target model, the plurality of feature extraction layers are connected end-to-end, the target object is an input of the first feature extraction layer in the plurality of feature extraction layers, and the second feature extraction layer is a last feature extraction layer in the plurality of feature extraction layers.

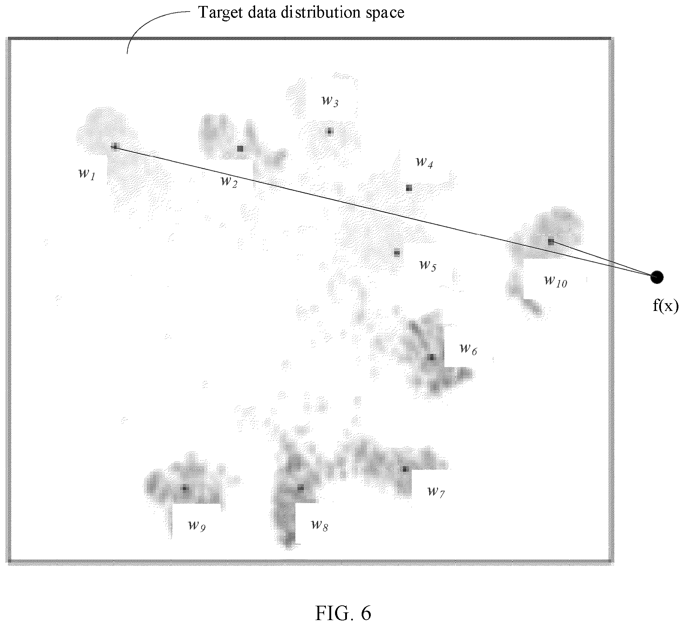

In a possible implementation, if the second feature extraction layer includes a plurality of weight vectors, a distance between the feature of the target object and each weight vector of the second feature extraction layer is obtained. If a longest distance in a plurality of distances exceeds a preset threshold, it is determined that the target object is an abnormal sample. As described above, a weight vector may be considered as a category center of a category. Referring to FIG. 6, it is assumed that there are a total of 10 weight vectors: W1 to W10. Target data distribution space may be obtained based on the weight vectors W1 to W10, so that the target data distribution space includes the weight vectors W1 to W10. Specifically, a size of a target data distribution space range obtained based on the weight vectors W1 to W10 may be determined based on an actual situation. This is not limited in this embodiment of this application. A square box in FIG. 6 is used to represent the target data distribution space. Theoretically, each training sample is included in the target data distribution space. When the abnormal sample is screened, the distance between the feature of the target object and each weight vector of the second feature extraction layer may be obtained, and whether the target object is an abnormal sample is determined based on the longest distance in the plurality of distances. Still referring to FIG. 6, it is assumed that the feature of the target object is f(x), which exceeds a preset threshold, and a distance between f(x) and each weight vector in W1 to W10 is obtained. It can be learned from FIG. 6 that a distance between f(x) and W1 is the longest. Therefore, the target object is determined as an abnormal sample based on the distance between f(x) and W1. A purpose of using the longest distance in the plurality of distances to determine whether the target object is an abnormal sample is to achieve a better recognition effect. For example, still referring to FIG. 6, if it is determined, based on a distance between f(x) and W10, whether the target object is an abnormal sample, because the distance between f(x) and W10 is very short (assuming that the distance between f(x) and w10 is a smallest value of the distance between f(x) and each weight vector in W1 to W10), and the distance may not exceed the preset threshold, f(x) is not considered as an abnormal sample. However, if f(x) is not in the target data distribution space (as shown in FIG. 6, f(x) is not in the square box), f(x) should be an abnormal sample. Therefore, to better recognize an abnormal sample, in this implementation, whether the target object is an abnormal sample is determined based on the longest distance in the plurality of distances.

In a preferred implementation, the training process may be further optimized, so that the trained preset model, that is, the target model, has better performance. The following describes this with reference to a specific implementation.

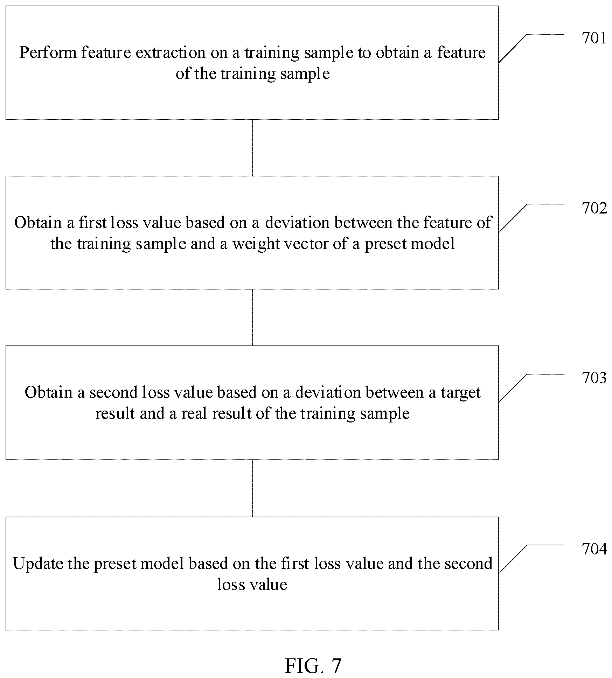

FIG. 7 is another schematic flowchart of a model training method according to an embodiment of this application. The method may include the following steps.

701. Perform feature extraction on a training sample to obtain a feature of the training sample.

702. Obtain a first loss value based on a deviation between the feature of the training sample and a weight vector of a preset model.

Step 701 and step 702 may be understood with reference to step 501 and step 502 in the embodiment corresponding to FIG. 5, and details are not described herein again.

703. Obtain a second loss value based on a deviation between a target result and a real result of the training sample.

The target result is determined based on a first prediction result and a preset function, the first prediction result is a prediction result of the preset model for the training sample, an input of the preset function is the first prediction result, an output of the preset function is the target result, and the output of the preset function is negatively correlated with the input of the preset function.

In the implementation corresponding to FIG. 3, a training process of the model is described, and the training process is a process of continuously reducing a loss value, so that a prediction result of the updated preset model for the training sample may be closer to an actual result. Assuming that after a few rounds of training, a prediction result of the prediction model for the training sample is close to the actual result, the training is stopped. Theoretically, more rounds of model training are more helpful for improving performance of the trained model. The model continuously learns in each round of training to improve prediction accuracy. Therefore, to reduce a convergence speed of the model and perform more rounds of training on the model, a prediction result obtained at each time of training may be further processed, so that a distance between a prediction result with a highest probability and the actual result is shortened. In comparison with performing no processing on the prediction result obtained at each time of training, after processing, a loss value obtained at each time of training increases. For example, it is assumed that at a time of training, a prediction result of the preset model for a training sample 1 is that a probability that the training sample 1 belongs to a cat is 0.9, and a probability that the training sample 1 belongs to a tiger is 0.1. The prediction result of the training is used as the input of the preset function, to obtain a target result 1 and a target result 2. Because the output of the preset function is negatively correlated with the input of the preset function, the target result 1 may be that the probability that the training sample 1 belongs to a cat is 0.6, and the probability that the training sample 1 belongs to a tiger is 0.4. In comparison with the prediction result (0.9, 0.1) before the processing, probabilities in the prediction result (0.6, 0.4) after the processing are relatively equalized, and this helps reduce the convergence speed of the model. The second loss value includes a loss value obtained based on a deviation between the target result 1 and a real category of the training sample 1, and a loss value obtained based on a deviation between the target result 2 and the real category of the training sample 1.

704. Update the preset model based on the first loss value and the second loss value.

The preset model is updated by using the first loss value and the second loss value that are obtained in step 702 and step 703, and step 701 to step 704 are repeatedly performed until a preset stop condition is satisfied. It may be understood that the preset stop condition is that the preset model has converged.

As can be learned from the embodiment corresponding to FIG. 7, the preset function is introduced in the model training process on a basis of the implementation corresponding to FIG. 5, the input of the preset function is negatively correlated with the output of the preset function, different outputs are selected based on different inputs of the preset function, no parameter needs to be manually adjusted, and different outputs can be automatically obtained (also referred to as obtaining different temperatures) based on different inputs. This prevents the model from being trapped in local optimization, reduces the convergence speed of the model, and makes performance of the trained model better.

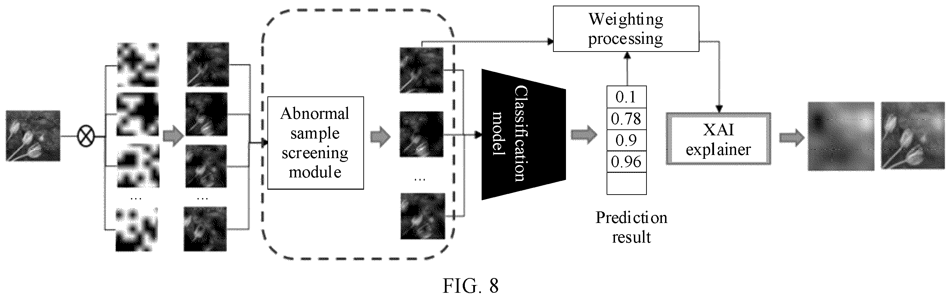

In a preferred implementation, the plurality of disturbed samples in the embodiment corresponding to FIG. 3 may be screened by using the target model obtained by using the method provided in the embodiment corresponding to FIG. 5, to recognize an abnormal sample in the plurality of disturbed samples. Alternatively, the plurality of disturbed samples in the embodiment corresponding to FIG. 3 may be screened by using the target model obtained by using the method provided in the embodiment corresponding to FIG. 7, to recognize an abnormal sample in the plurality of disturbed samples. The abnormal sample is deleted from the plurality of disturbed samples, and the saliency map of the first object is obtained by using the plurality of disturbed samples after the abnormal sample is deleted. To better demonstrate this solution, the following describes this with reference to two typical flowcharts. It should be understood that the following two typical flowcharts provide only two possible manners of combining the embodiments. In addition, there may be another combination manner. For example, in the following embodiment corresponding to FIG. 8, an example in which a first object is a first image is used for description. Certainly, the first object may be data of another type. For details, refer to the embodiment corresponding to FIG. 3. Details are not described herein again.

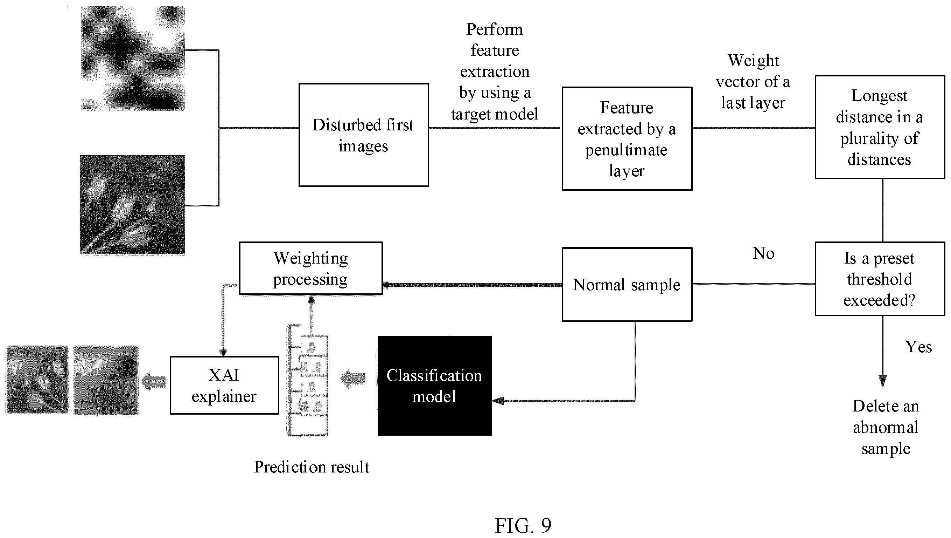

FIG. 8 is a schematic flowchart for generating a saliency map according to an embodiment of this application. A first image is obtained, and disturbance processing is performed on the first image to obtain disturbed first images. In the procedure shown in FIG. 8, a plurality of groups of pixels are randomly selected from the first image for masking, and one disturbed first image may be obtained based on each group of pixels selected for masking. Abnormal sample screening is performed on the obtained disturbed first images by using an abnormal sample screening module, abnormal samples are screened out from the disturbed first images and deleted, and the disturbed first images from which the abnormal samples are deleted are used as an input of a classification model. Weighting processing is performed, based on an output of the classification model, on the disturbed first images from which the abnormal samples are deleted, to obtain a weighting result, and the obtained weighting result is input into an XAI explainer, to obtain a saliency map of the first image. Referring to FIG. 9, a process of screening an abnormal sample is further described. The disturbed first images are input into a target model, feature extraction is performed on each disturbed first image by using the target model, and a distance between a feature extracted by a penultimate feature extraction layer and that extracted by a last feature extraction layer in a plurality of feature extraction layers in the target model is obtained. If a plurality of distances are included, it is determined whether a longest distance in the plurality of distances exceeds a preset threshold. If the longest distance exceeds the preset threshold, the disturbed first image is an abnormal sample, and the disturbed first image is deleted. If the longest distance does not exceed the preset threshold, the disturbed first image is a normal sample. The normal sample is used as an input of the classification model. Weighting processing is performed on the normal sample based on an output of the classification model, to obtain a weighting result, and the obtained weighting result is input into the XAI explainer, to obtain the saliency map of the first image. In addition, in a process of training a preset model to obtain the target model, a first loss value and a second loss value are used, and a preset function is introduced, to reduce a convergence speed of the model and improve performance of the target model.

According to the solution provided in this embodiment of this application, accuracy of a model explanation can be improved. The solution provided in this application is hereinafter described by using an example in which the solution provided in this application is applied to several typical scenarios.

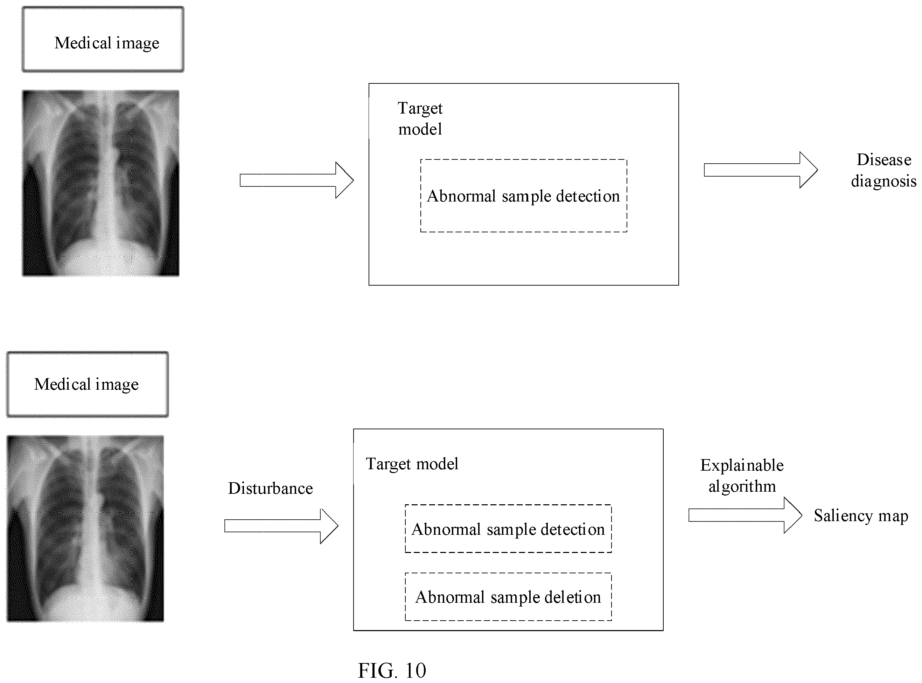

Referring to FIG. 10, the solution provided in this application may be applied to an application scenario of medical image detection. For example, a plurality of medical images (such as lung CT images) of a same body area are obtained. A training sample of the target model is a normal medical image, and the normal medical image means that a source object (a person) of the medical image is healthy and has no disease. The plurality of medical images are input into the target model, and an abnormal sample may be screened out. The abnormal sample herein is an abnormal medical image, and the abnormal medical image means that a source object (a person) of the medical image may have a disease. In another possible implementation, disturbance processing is performed on each medical image, and screening processing is performed on disturbed medical images to delete an abnormal sample from the disturbed medical images. A training sample of the target model is an abnormal medical image. The disturbed medical images are input into the target model, and an abnormal sample may be screened out. The abnormal sample herein is a sample that does not satisfy data distribution of the training sample. Normal samples in the disturbed medical images are input into the target model, and a saliency map of each medical image is obtained based on a prediction result of the target model. In this way, the saliency map of the medical image can be better explained.

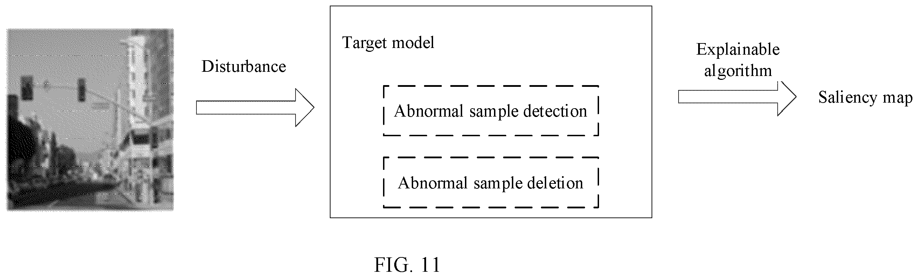

Referring to FIG. 11, the solution provided in this application may be applied to an application scenario of intelligent driving, for example, obtaining a traffic image (for example, an image obtained by using an in-vehicle camera). Disturbance processing is performed on each traffic image, and screening processing is performed on disturbed traffic images to delete an abnormal sample from the disturbed traffic images. Normal samples in the disturbed traffic images are input into the target model, and a saliency map of each traffic image is obtained based on a prediction result of the target model. In this way, the saliency map of the traffic image can better show which feature of the traffic image has greater impact on an output of the target model, and explainability of the model is improved.

For more intuitive understanding of beneficial effects brought by this solution, the following describes beneficial effects brought by the embodiments of this application with reference to data.

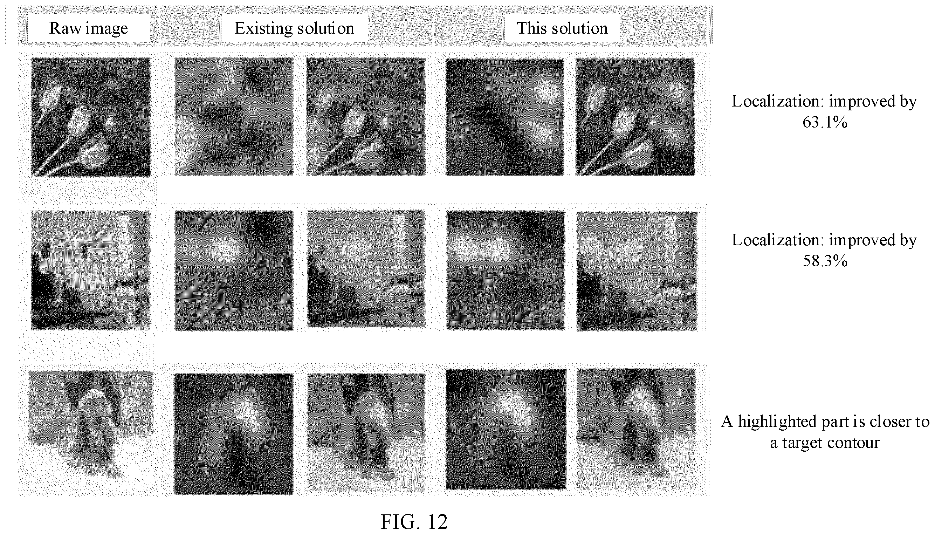

In a test experiment, a test data set is an ImageNet data set. A test experiment of image classification is performed on the ImageNet data set based on a model ResNet50, and a classification result is explained. Specifically, the classification result is explained by using a saliency map. FIG. 12 shows a test result. As shown in FIG. 12, image classification is performed on three typical raw images. One raw image includes a plurality of targets (a plurality of fish and a plurality of flowers). Another raw image is a long-distance scene (a street scene). Another raw image is a single target, and the target occupies a relatively large area in the raw image. An indicator for measuring accuracy of an explainable method includes localization (localization). An explanation based on the saliency map should highlight pixels related to a label in a picture. The localization indicator uses a target detection data set to measure a localization capability of the saliency map for a same label of a same picture by using an overlap between a highlighted part and a ground truth (ground truth) of the saliency map. The higher the localization capability, the more accurate the explainable method. In the solution provided in this application, because disturbed images are screened, in comparison with an existing solution, the localization indicator can be greatly improved by using a saliency map obtained by using a normal sample.

Specifically, in a multi-target scene in this application, a plurality of targets can be more accurately highlighted. However, in the existing solution, a single target is highlighted, and no additional target can be captured in other bright parts accurately. In a street scene in this application, two traffic lights are highlighted, but in the existing solution, only one traffic light is highlighted. In a scene with a single large target in this application, a highlighted part is closer to a target contour. In the solution provided in this application, the localization indicator is significantly improved: improved by 63.1% in the multi-target scene, and improved by 58.3% in the street scene.

In another test experiment, DenseNet-BC and ResNet50 are selected as target models separately. Referring to Table 1, when DenseNet-BC is selected as a target model, a CifarlO data set is used as a normal sample, and a TinyImageNet data set is used as an abnormal sample. During inference, in comparison with the existing solution, in the solution provided in this application, an area under receiver operating characteristic curve (area under receiver operating characteristic curve, AUROC) indicator is improved by 2.9%, and a corresponding true negative rate at 95% true positive rate (true negative rate at 95% True Positive rate, TNR@TPR95) indicator is improved by 26.2%. When ResNet50 is used as a target model, and the ImageNet data set is used as normal sample data, and a Gaussian noise data set is used as an abnormal sample for inference, the AUROC indicator is improved by 9.2%, and the TNR@TPR95 indicator is improved by 98.3%. The higher the AUROC indicator and the TNR@TPR95 indicator, the higher the accuracy of detecting an abnormal sample.

**Table 1**

| DenseNet-BC | | | ResNet50 | | |
|---|---|---|---|---|---|
| | Other solutions | This solution | | Other solutions | This solution |
| AUROC | 95.48% | 98.23% | AUROC | 91.53% | 99.9964% |
| TNR@TPR95 | 72.33% | 91.26% | TNR@TPR95 | 50.44% | 100 |

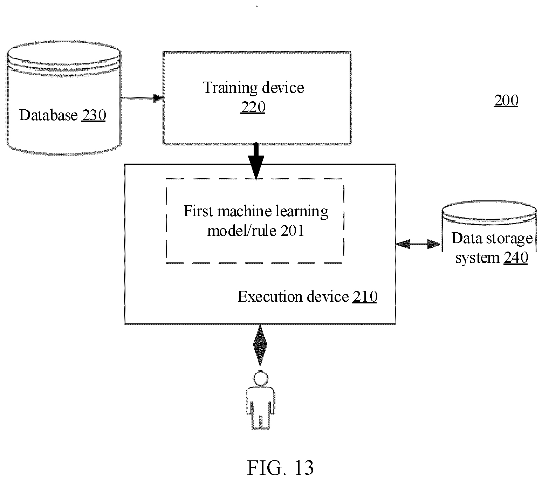

For better understanding of this solution, a system provided in an embodiment of this application is first described with reference to FIG. 13. FIG. 13 is a diagram of a system architecture according to an embodiment of this application. In FIG. 13, a system 200 includes an execution device 210, a training device 220, a database 230, and a data storage system 240.

In a training phase, the database 230 stores a training data set. The database 230 may be specifically represented as a storage medium in any form, and is not limited to a database in a conventional sense. The training data set may include a plurality of training samples. A data type of the training sample is not limited in this application. For example, the training sample may be image data, the training sample may be voice data, or the training sample may be text data. It should be noted that data types of the training samples included in the training data set are usually the same. The training device 220 generates a preset model, and performs iterative training on the preset model by using the training data set in the database, to obtain a mature preset model (that is, a target model). How to train the preset model to obtain the target model is described in detail in the foregoing corresponding embodiment, and details are not described herein again.

In an inference phase, the execution device 210 may invoke data, code, and the like in the data storage system 240, or may store data, instructions, and the like in the data storage system 240. The data storage system 240 may be configured in the execution device 210, or may be a memory outside the execution device 210. The execution device 210 may invoke the mature preset model to extract a feature of a first object, perform a classification task based on the extracted feature of the first object, and obtain a saliency map based on a prediction result (for understanding, refer to the foregoing embodiment related to obtaining of a saliency map), or detect an abnormal sample based on the extracted feature of the first object (for understanding, refer to the foregoing embodiment related to abnormal sample detection).

In some embodiments of this application, for example, in FIG. 3, a "user" may directly interact with the execution device 210. In other words, the execution device 210 and a client device are integrated into a same device. For example, in some application scenarios, the execution device 210 may be represented as a terminal device, for example, a mobile phone, a camera, or a smart home. In this case, in the inference phase, the user may input the first object by using the execution device 210. For example, the user performs photographing by using a camera, and an image obtained by the camera is used as an input of the mature preset model. In some other application scenarios, the execution device 210 may be specifically represented as an execution device provided with a display screen. In the inference phase, after completing one task (or a plurality of tasks), the execution device 210 may display an output result of the preset model to the user. For example, after performing an image classification task, the execution device 210 displays an image classification result to the user. The execution device 210 may also be represented in other forms, which are not listed herein one by one. However, FIG. 3 is only a schematic diagram of an architecture according to an embodiment of the present invention, and a position relationship between devices, components, modules, and the like shown in the figure does not constitute any limitation.

In some other embodiments of this application, the execution device 210 and the client device may be independent devices. The execution device 210 is provided with an input/output interface to exchange data with the client device. The "user" may input at least one task to the execution device 210 by using the input/output interface of the client device, and the execution device 210 returns a processing result to the client device by using the input/output interface.

The foregoing describes the method for obtaining a saliency map, the method for training a model, and the method for detecting an abnormal object according to the embodiments of this application. The solutions provided in this application can improve performance of the saliency map, further reduce difficulty in training an anomaly detection model, and improve accuracy of abnormal object detection.

It may be understood that, to implement the foregoing functions, the following further provides related devices configured to implement the foregoing solutions. The related devices include corresponding hardware structures and/or software modules for performing various functions. A person skilled in the art should be easily aware that modules and algorithm steps in the examples described with reference to the embodiments disclosed in this specification can be implemented by hardware or a combination of hardware and computer software in this application. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

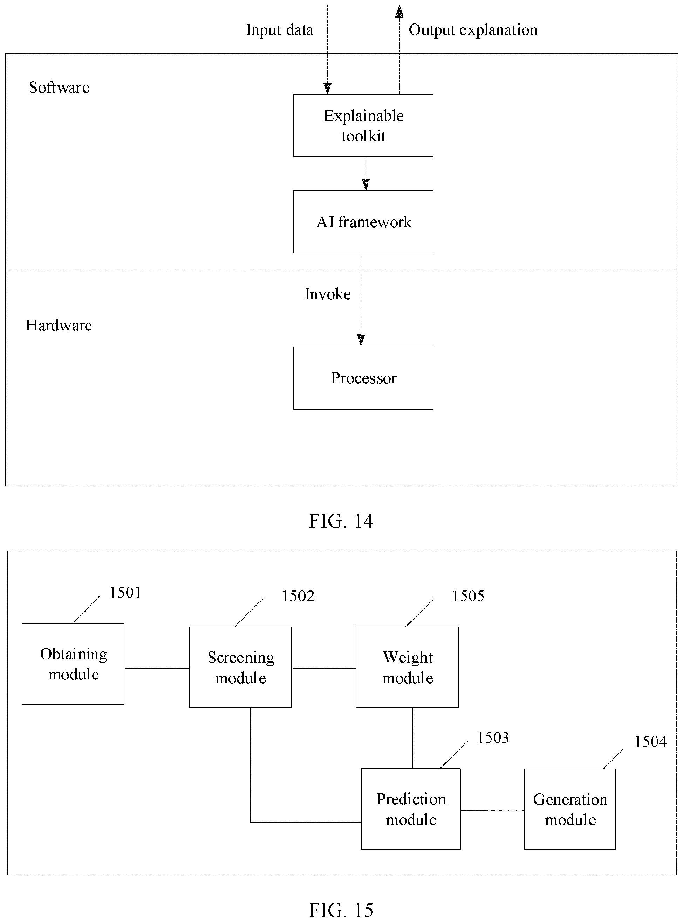

FIG. 14 is a schematic diagram of an architecture of an execution device according to an embodiment of this application. As shown in FIG. 14, the execution device includes corresponding hardware structures and software modules for performing various functions. The execution device is configured to receive input data. An explainable toolkit outputs a saliency map based on the input data. The explainable toolkit needs to invoke an AI framework in a process of outputting the saliency map based on the input data, where the target model described in the foregoing embodiment is deployed in the AI framework. A calculation process requires support of a hardware structure, and the execution device further includes a processor, configured to run code in software. The processor may be a central processing unit (central processing units, CPU), a neural-network processing unit (neural-network processing unit, NPU), a graphics processing unit (graphics processing unit, GPU), a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. A general-purpose processor may be a microprocessor or any conventional processor or the like.

Specifically, FIG. 15 is a schematic diagram of a structure of an apparatus for generating a saliency map according to an embodiment of this application. The apparatus for generating a saliency map may include an obtaining module 1501, a screening module 1502, a prediction module 1503, and a generation module 1504.

In a possible implementation, the apparatus for generating a saliency map includes: the obtaining module 1501 is configured to obtain a plurality of objects, where the plurality of objects are obtained by performing disturbance processing on a first object. The screening module 1502 is configured to perform, based on a first condition, screening processing on the plurality of objects obtained by the obtaining module 1501, to obtain a plurality of updated objects, where the plurality of updated objects satisfy target data distribution, the target data distribution is obtained based on a training sample, and the training sample is used to train a preset model to obtain a target model. The prediction module 1503 is configured to input the plurality of updated objects obtained by the screening module 1502 into the target model, to output a first prediction result. The generation module 1504 is configured to generate a saliency map of the first object based on the first prediction result obtained by the prediction module 1503 and the plurality of updated objects.

In a possible implementation, the target model is obtained by updating the preset model by using a first loss value, the first loss value is determined based on a deviation between a feature of the training sample and a weight vector of the preset model, and the feature of the training sample is obtained by performing feature extraction on the training sample by using the preset model. The screening module 1502 is specifically configured to: if the plurality of objects include a target object, delete the target object from the plurality of objects to obtain the plurality of updated objects, where a distance between a feature of the target object and a weight vector of the target model exceeds a preset threshold, and the feature of the target object is obtained by performing feature extraction on the target object by using the target model.

In a possible implementation, the feature of the target object is specifically extracted by using a first feature extraction layer, the first feature extraction layer is any one of a plurality of feature extraction layers in the target model, the distance between the feature of the target object and the weight vector of the target model is specifically a distance between the feature of the target object and a weight vector of a second feature extraction layer, and the second feature extraction layer is any one of the plurality of feature extraction layers.

In a possible implementation, the first feature extraction layer and the second feature extraction layer are a same feature extraction layer or different feature extraction layers.

In a possible implementation, the first feature extraction layer is specifically a penultimate feature extraction layer in a plurality of feature extraction layers in a feature extraction model, the plurality of feature extraction layers are connected end-to-end, the target object is an input of the first feature extraction layer in the plurality of feature extraction layers, and the second feature extraction layer is specifically a last feature extraction layer in the plurality of feature extraction layers.

In a possible implementation, if there are a plurality of weight vectors of the second feature extraction layer, a distance between the feature of the target object and a target weight vector of the second feature extraction layer exceeds the preset threshold, the distance between the feature of the target object and the target weight vector of the second feature extraction layer is a longest distance in a plurality of distances, and the plurality of distances include a distance between the feature of the target object and each weight vector of the second feature extraction layer.

In a possible implementation, the target model is specifically obtained by updating the preset model by using the first loss value and a second loss value, the second loss value is determined based on a deviation between a target result and a real result of the training sample, the target result is determined based on a second prediction result and a preset function, the second prediction result is a prediction result of the preset model for the training sample, an input of the preset function is the second prediction result, an output of the preset function is the target result, and the output of the preset function is negatively correlated with the input of the preset function.

In a possible implementation, the apparatus for generating a saliency map further includes a weight module 1505, where the weight module 1505 is configured to: set weights of the plurality of updated objects to a first weight; and set weights of a plurality of remaining objects to a second weight, where the plurality of remaining objects are objects other than the plurality of updated objects in the plurality of objects, and the first weight is greater than the second weight. The prediction module 1503 is specifically configured to input a first result and a second result into the target model, to output the first prediction result, where the first result is determined based on the first weight and the plurality of updated objects, and the second result is determined based on the second weight and the plurality of remaining objects.

It should be noted that content such as information exchange between the modules in the apparatus for generating a saliency map as shown in FIG. 15 and an execution process thereof is based on a same concept as the method embodiments corresponding to FIG. 3 to FIG. 9 in this application. For specific content, refer to the descriptions in the foregoing method embodiments in this application. Details are not described herein again.

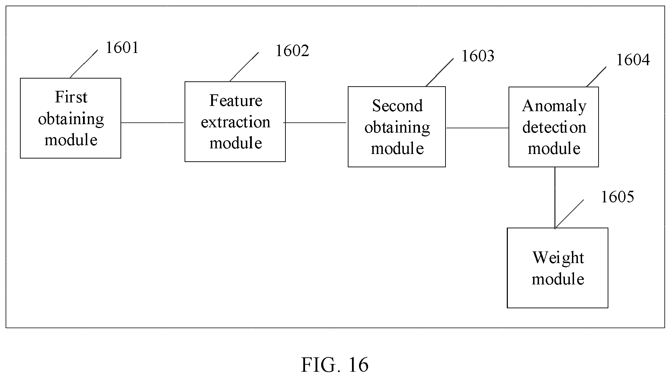

Specifically, FIG. 16 is a schematic diagram of a structure of an apparatus for detecting an abnormal object according to an embodiment of this application. The apparatus for detecting an abnormal object may include a first obtaining module 1601, a feature extraction module 1602, a second obtaining module 1603, and an anomaly detection module 1604.

In a possible implementation, this application provides an apparatus for detecting an abnormal object. The apparatus includes: the first obtaining module 1601 is configured to obtain a plurality of objects. The feature extraction module 1602 is configured to perform feature extraction on a target object by using a feature extraction model, to obtain a feature of the target object, where the target object is any one of the plurality of objects, the feature extraction model is obtained by updating a preset model by using a first loss value, the first loss value is determined based on a deviation between a feature of a training sample and a weight vector of the preset model, and the feature of the training sample is obtained by performing feature extraction on the training sample by using the preset model. The second obtaining module 1603 is configured to obtain a distance between the feature of the target object and a weight vector of the feature extraction model. The anomaly detection module 1604 is configured to: when the distance exceeds a preset threshold, determine that the target object is an abnormal object.

In a possible implementation, the feature extraction module 1602 is specifically configured to perform feature extraction on the target object by using a first feature extraction layer, to obtain the feature of the target object, where the first feature extraction layer is any one of a plurality of feature extraction layers in the feature extraction model; and the obtaining a distance between the feature of the target object and a weight vector of the feature extraction model includes: obtaining a distance between the feature of the target object and a weight vector of a second feature extraction layer, where the second feature extraction layer is any one of the plurality of feature extraction layers.

In a possible implementation, the first feature extraction layer and the second feature extraction layer are a same feature extraction layer or different feature extraction layers.

In a possible implementation, the first feature extraction layer is a penultimate feature extraction layer in the plurality of feature extraction layers in the feature extraction model, the plurality of feature extraction layers are connected end-to-end, the target object is an input of the first feature extraction layer in the plurality of feature extraction layers, and the second feature extraction layer is a last feature extraction layer in the plurality of feature extraction layers.

In a possible implementation, the second obtaining module 1603 is specifically configured to: if there are a plurality of weight vectors of the second feature extraction layer, obtain a distance between the feature of the target object and each weight vector of the second feature extraction layer. The anomaly detection module 1604 is specifically configured to: when a longest distance in a plurality of distances exceeds the preset threshold, determine that the target object is an abnormal sample.

In a possible implementation, the feature extraction model is specifically obtained by updating the preset model by using the first loss value and a second loss value, the second loss value is determined based on a deviation between a target result and a real result of the training sample, the target result is determined based on a first prediction result and a preset function, the first prediction result is a prediction result of the preset model for the training sample, an input of the preset function is the first prediction result, an output of the preset function is the target result, and the output of the preset function is negatively correlated with the input of the preset function.

In a possible implementation, the plurality of objects are a plurality of disturbed first images, the plurality of disturbed first images are obtained by performing disturbance processing on a first image, and the anomaly detection module 1604 is specifically configured to: if the distance exceeds the preset threshold, delete the target object from the plurality of disturbed first images to obtain a plurality of updated disturbed first images, where the plurality of updated disturbed first images are used to obtain a saliency map of the first image.

In a possible implementation, the plurality of objects are a plurality of disturbed first images, the plurality of disturbed first images are obtained by performing disturbance processing on a first image, and the apparatus further includes a weight module 1605, where the anomaly detection module 1604 is further configured to: if the distance does not exceed the preset threshold, determine that the target object is a normal object; and the weight module 1605 is configured to: if the target object is an abnormal object, set a weight of the target object to a first weight; or if the target object is a normal object, set a weight of the target object to a second weight, where the second weight is greater than a first weight; and process the feature of the target object based on the first weight or the second weight to obtain a processed target object, where the processed target object is used to obtain a saliency map of the first image.

It should be noted that content such as information exchange between the modules in the apparatus for detecting an abnormal object as shown in FIG. 16 and an execution process thereof is based on a same concept as the method embodiments corresponding to FIG. 3 to FIG. 9 in this application. For specific content, refer to the descriptions in the foregoing method embodiments in this application. Details are not described herein again.

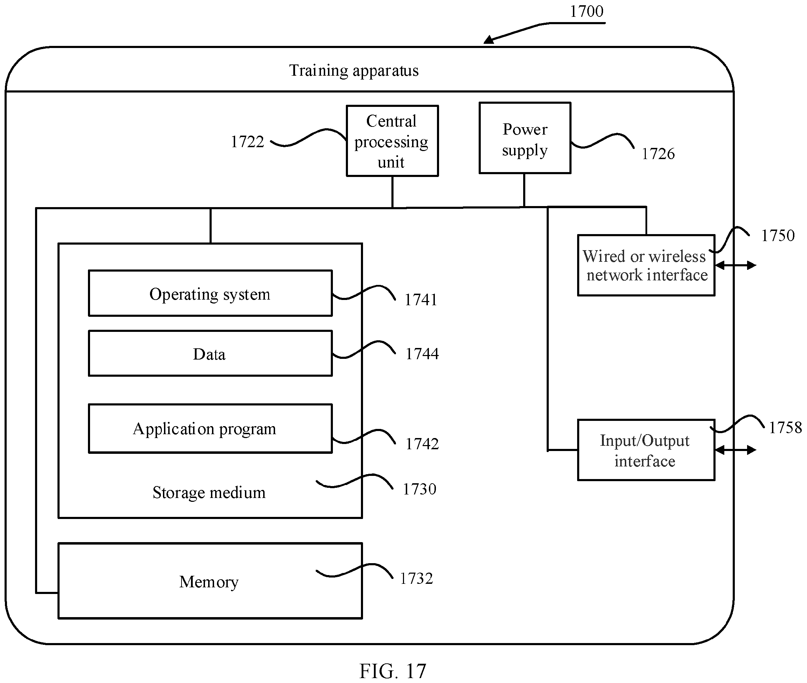

An embodiment of this application further provides a training apparatus. FIG. 17 is a schematic diagram of a structure of a training apparatus according to an embodiment of this application. The preset model described in FIG. 5 or FIG. 6 may be deployed on the training apparatus 1700. Specifically, the training apparatus 1700 may vary greatly due to different configurations or performance, and may include one or more central processing units (central processing units, CPUs) 1722 (for example, one or more processors), a memory 1732, and one or more storage media 1730 (for example, one or more mass storage devices) that store an application program 1742 or data 1744. The memory 1732 and the storage medium 1730 may be transitory storage or persistent storage. In an embodiment, the memory 1732 is a random access memory (random access memory, RAM), and may directly exchange data with the central processing unit 1722. The memory 1732 is configured to load the data 1744 and the application program 1742 and/or an operating system 1741 for direct running and use by the central processing unit 1722, and is usually used as a temporary data storage medium of the operating system or another running program. The program stored in the storage medium 1730 may include one or more modules (not shown in the figure), and each module may include a series of instructions for performing operations on the training apparatus. Further, the central processing unit 1722 may be configured to communicate with the storage medium 1730, and perform operations on the training apparatus 1700 by using the series of instructions in the storage medium 1730.

The training apparatus 1700 may further include one or more power supplies 1726, one or more wired or wireless network interfaces 1750, one or more input/output interfaces 1758, and/or one or more operating systems 1741, such as Windows Server™, Mac OS X™, Unix™, Linux™, or FreeBSD™.

It should be noted that the central processing unit 1722 is further configured to perform other steps performed by using the preset model in FIG. 5 or FIG. 6. For a specific implementation of performing, by the central processing unit 1722, the steps performed by using the preset model in the embodiment corresponding to FIG. 5 or FIG. 6 and beneficial effects brought by the implementation, refer to descriptions in the method embodiment corresponding to FIG. 5 or FIG. 6. Details are not described herein again.

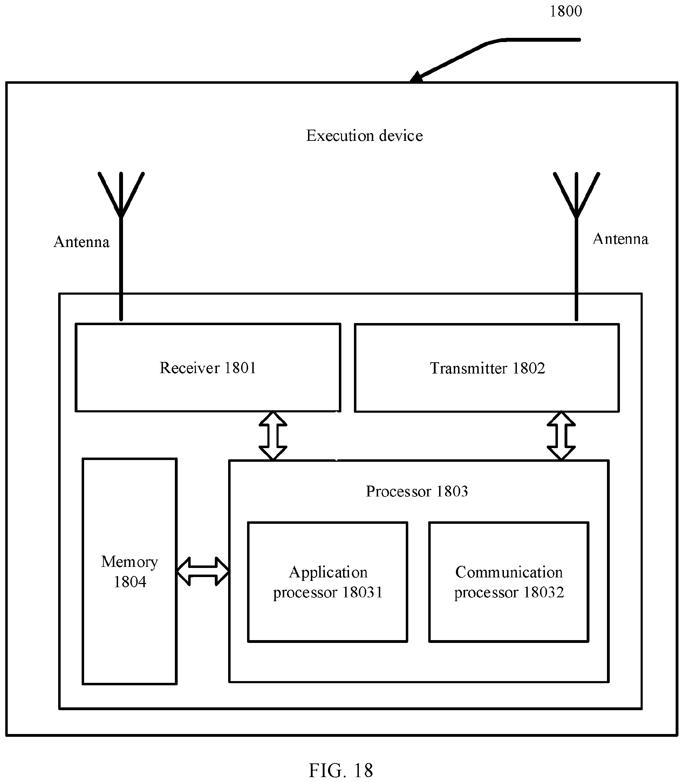

An embodiment of this application further provides an execution device. FIG. 18 is a schematic diagram of a structure of an execution device according to an embodiment of this application. The target model described in FIG. 3 to FIG. 9 may be deployed on the execution device 1800, and is configured to perform the corresponding step of generating a saliency map or the step of detecting an abnormal sample in FIG. 3 to FIG. 9. Specifically, the execution device 1800 includes a receiver 1801, a transmitter 1802, a processor 1803, and a memory 1804 (the execution device 1800 may include one or more processors 1803, and one processor is used as an example in FIG. 18). The processor 1803 may include an application processor 18031 and a communication processor 18032. In some embodiments of this application, the receiver 1801, the transmitter 1802, the processor 1803, and the memory 1804 may be connected by using a bus or in another manner.

The memory 1804 may include a read-only memory and a random access memory, and provide instructions and data for the processor 1803. A part of the memory 1804 may further include a non-volatile random access memory (non-volatile random access memory, NVRAM). The memory 1804 stores a processor and operation instructions, executable modules or data structures, or a subset thereof, or an extended set thereof. The operation instructions may include various operation instructions for implementing various operations.

The processor 1803 controls an operation of the execution device. In a specific application, the components of the execution device are coupled together through a bus system. In addition to a data bus, the bus system may further include a power bus, a control bus, a status signal bus, and the like. However, for clear description, various types of buses in the figure are marked as the bus system.

The method disclosed in the foregoing embodiment of this application may be applied to the processor 1803, or implemented by the processor 1803. The processor 1803 may be an integrated circuit chip with a signal processing capability. In an implementation process, the steps of the foregoing method may be completed by a hardware integrated logic circuit in the processor 1803 or by using instructions in a form of software. The processor 1803 may be a general-purpose processor, a digital signal processor (digital signal processing, DSP), a microprocessor, or a microcontroller, and may further include an application-specific integrated circuit (application-specific integrated circuit, ASIC), a field programmable gate array (field programmable gate array, FPGA) or another programmable logic device, a discrete gate or transistor logic device, or a discrete hardware component. The processor 1803 may implement or perform the methods, steps, and logical block diagrams that are disclosed in the embodiments of this application. The general-purpose processor may be a microprocessor, or the processor may be any conventional processor or the like. Steps of the methods disclosed with reference to the embodiments of this application may be directly performed and completed by a hardware decoding processor, or may be performed and completed by using a combination of hardware and software modules in a decoding processor. The software module may be located in a mature storage medium in the art, for example, a random access memory, a flash memory, a read-only memory, a programmable read-only memory, an electrically erasable programmable memory, or a register. The storage medium is located in the memory 1804. The processor 1803 reads information in the memory 1804 and completes the steps in the foregoing methods in combination with hardware in the processor 1804.

The receiver 1801 may be configured to receive input digit or character information, and generate a signal input related to a related setting and function control of the execution device. The transmitter 1802 may be configured to output digit or character information through an interface. The transmitter 1802 may be further configured to send an instruction to a disk group through the interface, to modify data in the disk group. The transmitter 1802 may further include a display device such as a display screen.

In one case, in this embodiment of this application, the application processor 18031 is configured to perform the method performed by the target model described in the embodiments corresponding to FIG. 3 to FIG. 9.

For a specific implementation of performing, by the application processor 18031, the functions of the target model in the embodiments corresponding to FIG. 3 to FIG. 9 and beneficial effects brought by the implementation, refer to the descriptions in the method embodiments corresponding to FIG. 3 to FIG. 9. Details are not described herein again.

It should be understood that the foregoing is merely an example provided in this embodiment of this application. In addition, the vehicle may have more or fewer components than the shown components, or two or more components may be combined, or component configurations are different.

All or some of the foregoing embodiments may be implemented by software, hardware, firmware, or any combination thereof. When software is used to implement the embodiments, all or some of the embodiments may be implemented in a form of a computer program product.

The execution device and the training device provided in the embodiments of this application may be specifically chips, so that the chips perform the methods described in the embodiments shown in FIG. 3 to FIG. 9. Optionally, the storage unit is an on-chip storage unit, for example, a register or a buffer. Alternatively, the storage unit may be an off-chip storage unit in a wireless access device, for example, a read-only memory (read-only memory, ROM), another type of static storage device that can store static information and instructions, or a random access memory (random access memory, RAM).

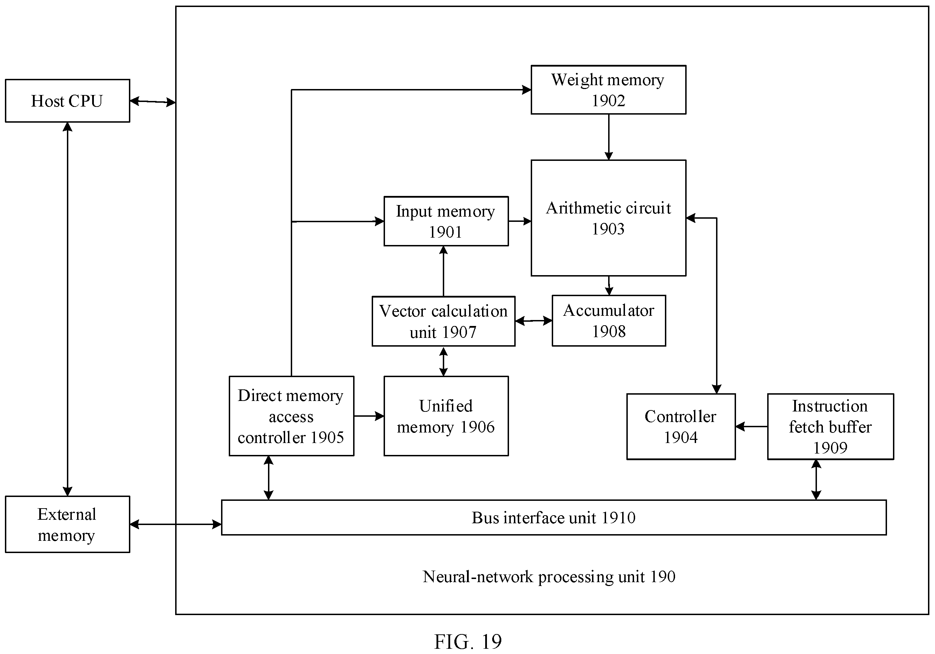

Specifically, FIG. 19 is a schematic diagram of a structure of a chip according to an embodiment of this application. The chip may be represented as a neural-network processing unit NPU 190. The NPU 190 is mounted to a host CPU (Host CPU) as a coprocessor, and the host CPU assigns a task. A core part of the NPU is an arithmetic circuit 1903. A controller 1904 may control the arithmetic circuit 1903 to extract matrix data in a memory and perform a multiplication operation.

In some implementations, the arithmetic circuit 1903 internally includes a plurality of processing units (Process Engine, PE). In some implementations, the arithmetic circuit 1903 is a two-dimensional systolic array. The arithmetic circuit 1903 may alternatively be a one-dimensional systolic array or another electronic circuit capable of performing mathematical operations such as multiplication and addition. In some implementations, the arithmetic circuit 1903 is a general-purpose matrix processor.

For example, it is assumed that there is an input matrix A, a weight matrix B, and an output matrix C. The arithmetic circuit fetches corresponding data of the matrix B from a weight memory 1902, and buffers the data on each PE in the arithmetic circuit. The arithmetic circuit fetches data of the matrix A from an input memory 1901, performs a matrix operation on the data and the matrix B, and stores an obtained partial result or final result of the matrix in an accumulator (accumulator) 1908.

A unified memory 1906 is configured to store input data and output data. Weight data is directly transferred to the weight memory 1902 by using a direct memory access controller (Direct Memory Access Controller, DMAC) 1905. Input data is also transferred to the unified memory 1906 by using the DMAC.

A bus interface unit 1910 (Bus Interface Unit, BIU for short) is used by an instruction fetch buffer 1909 to obtain an instruction from an external memory, and further used by the direct memory access controller 1905 to obtain original data of the input matrix A or the weight matrix B from the external memory.

The DMAC is mainly configured to transfer input data in the external memory DDR to the unified memory 1906, transfer weight data to the weight memory 1902, or transfer input data to the input memory 1901.

A vector calculation unit 1907 includes a plurality of arithmetic processing units. When necessary, the vector calculation unit 1907 performs further processing on an output of the arithmetic circuit, for example, vector multiplication, vector addition, an exponential operation, a logarithmic operation, and value comparison. The vector calculation unit 1907 is mainly used for network calculation, such as batch normalization (batch normalization), pixel-level summation, and upsampling of a feature map, at a non-convolutional or non-fully connected layer in a neural network.

In some implementations, the vector calculation unit 1907 can store a processed output vector in the unified memory 1906. For example, the vector calculation unit 1907 may apply a linear function and/or a non-linear function to the output of the arithmetic circuit 1903, for example, perform linear interpolation on a feature map extracted by a convolutional layer, or for another example, accumulate value vectors to generate an activation value. In some implementations, the vector calculation unit 1907 generates a normalized value, a pixel-level summation value, or both. In some implementations, the processed output vector can be used as an activation input to the arithmetic circuit 1903, for example, for use at a subsequent layer in the neural network.

The instruction fetch buffer (instruction fetch buffer) 1909 connected to the controller 1904 is configured to store an instruction used by the controller 1904. The unified memory 1906, the input memory 1901, the weight memory 1902, and the instruction fetch buffer 1909 are all on-chip memories. The external memory is private for a hardware architecture of the NPU.

An operation at each layer in a recurrent neural network may be performed by the arithmetic circuit 1903 or the vector calculation unit 1907.

Any one of the foregoing processors may be a general-purpose central processing unit, a microprocessor, an ASIC, or one or more integrated circuits configured to control execution of a program of the method in the first aspect.

An embodiment of this application further provides a chip. The chip includes a processing unit and a communications unit. The processing unit may be, for example, a processor. The communications unit may be, for example, an input/output interface, a pin, or a circuit. The processing unit may execute computer-executable instructions stored in a storage unit, so that the chip performs the methods described in FIG. 3 to FIG. 9. Optionally, the storage unit is an on-chip storage unit, for example, a register or a buffer. Alternatively, the storage unit may be an off-chip storage unit in a wireless access device, for example, a read-only memory (read-only memory, ROM) or another type of static storage device that can store static information and instructions, or a random access memory (random access memory, RAM). Specifically, the processing unit or the processor may be a central processing unit (central processing units, CPU), a neural-network processing unit (neural-network processing unit, NPU), a graphics processing unit (graphics processing unit, GPU), a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor or any conventional processor or the like.

An embodiment of this application further provides a computer-readable storage medium. The computer-readable storage medium stores a program used to training a model. When the program runs on a computer, the computer is enabled to perform the methods described in FIG. 3 to FIG. 9.

An embodiment of this application further provides a computer program product. When the computer program product runs on a computer, the computer is enabled to perform the steps of the methods described in the embodiments shown in FIG. 3 to FIG. 9. The computer program product includes one or more computer instructions. When the computer program instructions are loaded and executed on the computer, the procedures or functions according to the embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or may be a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (Solid State Disk, SSD)), or the like.

An embodiment of this application further provides a circuit system. The circuit system includes a processing circuit. The processing circuit is configured to perform the steps of the methods described in the embodiments shown in FIG. 3 to FIG. 9.

Based on the descriptions of the foregoing implementations, a person skilled in the art may clearly understand that this application may be implemented by software only or by using software in addition to necessary universal hardware, or may certainly be implemented by dedicated hardware, including a dedicated integrated circuit, a dedicated CLU, a dedicated memory, a dedicated component, and the like. Generally, any function that can be performed by a computer program can be easily implemented by using corresponding hardware. Moreover, a specific hardware structure used to implement a same function may be in various forms, for example, in a form of an analog circuit, a digital circuit, or a dedicated circuit. However, in this application, a software program implementation is a better implementation in most cases. Based on such an understanding, the technical solutions of this application essentially or the part contributing to the prior art may be implemented in a form of a software product. The computer software product is stored in a readable storage medium, such as a floppy disk, a USB flash drive, a removable hard disk, a ROM, a RAM, a magnetic disk, or an optical disc of a computer, and includes several instructions for instructing a computer device (which may be a personal computer, a training device, a network device, or the like) to perform the methods in the embodiments of this application. In addition, the computer software product may also be embodied in a form of a control, a driver, an independent software object, a downloadable software object, or the like.

In the specification, claims, and the accompanying drawings of this application, the terms "first", "second", and the like are intended to distinguish between similar objects but do not necessarily indicate a specific order or sequence. It should be understood that the data used in such a way are interchangeable in proper circumstances so that embodiments described herein can be implemented in other orders than the order illustrated or described herein. The term "and/or" in this application describes only an association relationship between associated objects and represents that three relationships may exist. For example, A and/or B may represent the following three cases: Only A exists, both A and B exist, and only B exists. In addition, the character "/" in this specification generally indicates an "or" relationship between the associated objects. In addition, the terms "include", "have", and any other variant thereof are intended to cover a non-exclusive inclusion. For example, a process, method, system, product, or device that includes a series of steps or modules is not necessarily limited to those steps or modules that are expressly listed, but may include other steps or modules that are not expressly listed or that are inherent to the process, method, system, product, or device. Names or numbers of steps in this application do not mean that the steps in the method procedure need to be performed in a time/logical sequence indicated by the names or numbers. An execution sequence of the steps in the procedure that have been named or numbered can be changed based on a technical objective to be achieved, provided that same or similar technical effects can be achieved.. Division into the modules in this application is logical division. In actual application, there may be another division manner. For example, a plurality of modules may be combined or integrated into another system, or some features may be ignored or may not be performed. In addition, the displayed or discussed mutual coupling or direct coupling or communication connection may be through some ports, and the indirect coupling or communication connection between modules may be in an electrical form or another similar form. This is not limited in this application. In addition, modules or submodules described as separate components may be or may not be physically separated, or may be or may not be physical modules, or may be distributed in a plurality of circuit modules. Objectives of the solutions of this application may be achieved by selecting some or all of the modules according to actual requirements.

## Claims

1. A method for generating a saliency map, comprising:

   obtaining a plurality of objects, wherein the plurality of objects are obtained by performing disturbance processing on a first object;
   performing screening processing on the plurality of objects based on a first condition, to obtain a plurality of updated objects, wherein the plurality of updated objects satisfy target data distribution, the target data distribution is obtained based on a training sample, and the training sample is used to train a preset model to obtain a target model;
   obtaining an input of the target model based on the plurality of updated objects; and
   generating a saliency map of the first object based on a first prediction result output by the target model and the plurality of updated objects.

**2.** The method according to claim 1, wherein the first condition is deleting a target object from the plurality of objects, a distance between a feature of the target object and a weight vector of the target model exceeds a preset threshold, and the feature of the target object is obtained by performing feature extraction on the target object by using the target model.

**3.** The method according to claim 2, wherein the feature of the target object is specifically extracted by using a first feature extraction layer, the first feature extraction layer is any one of a plurality of feature extraction layers in the target model, the distance between the feature of the target object and the weight vector of the target model is specifically a distance between the feature of the target object and a weight vector of a second feature extraction layer, and the second feature extraction layer is any one of the plurality of feature extraction layers.

**4.** The method according to claim 3, wherein the first feature extraction layer and the second feature extraction layer are different feature extraction layers.

**5.** The method according to claim 3 or 4, wherein the first feature extraction layer is specifically a penultimate feature extraction layer in a plurality of feature extraction layers in a feature extraction model, the plurality of feature extraction layers are connected end-to-end, the target object is an input of the first feature extraction layer in the plurality of feature extraction layers, and the second feature extraction layer is specifically a last feature extraction layer in the plurality of feature extraction layers.

**6.** The method according to any one of claims 3 to 5, wherein a distance between the feature of the target object and a target weight vector of the second feature extraction layer exceeds the preset threshold, the distance between the feature of the target object and the target weight vector of the second feature extraction layer is a longest distance in a plurality of distances, and the plurality of distances comprise a distance between the feature of the target object and each weight vector of the second feature extraction layer.

**7.** The method according to any one of claims 1 to 6, wherein the target model is obtained by updating the preset model by using a first loss value, the first loss value is determined based on a deviation between a feature of the training sample and a weight vector of the preset model, and the feature of the training sample is obtained by performing feature extraction on the training sample by using the preset model.

**8.** The method according to claim 7, wherein the target model is specifically obtained by updating the preset model by using the first loss value and a second loss value, the second loss value is determined based on a deviation between a target result and a real result of the training sample, the target result is determined based on a second prediction result and a preset function, the second prediction result is a prediction result of the preset model for the training sample, an input of the preset function is the second prediction result, an output of the preset function is the target result, and the output of the preset function is negatively correlated with the input of the preset function.

**9.** The method according to any one of claims 1 to 7, wherein the method further comprises:

setting weights of the plurality of updated objects to a first weight; and
setting weights of a plurality of remaining objects to a second weight, wherein the plurality of remaining objects are objects other than the plurality of updated objects in the plurality of objects, and the first weight is greater than the second weight; and
the obtaining an input of the target model based on the plurality of updated objects comprises:
obtaining a first result based on the first weight and the plurality of updated objects, wherein the first result is an input of the target model, the input of the target model further comprises a second result, and the second result is obtained based on the second weight and the plurality of remaining objects.

**10.** A method for detecting an abnormal object, comprising:

obtaining a plurality of objects;
performing feature extraction on a target object by using a feature extraction model, to obtain a feature of the target object, wherein the target object is any one of the plurality of objects, the feature extraction model is obtained by updating a preset model by using a first loss value, the first loss value is determined based on a deviation between a feature of a training sample and a weight vector of the preset model, and the feature of the training sample is obtained by performing feature extraction on the training sample by using the preset model; and

obtaining a distance between the feature of the target object and a weight vector of the feature extraction model, wherein when the distance exceeds a preset threshold, the target object is an abnormal object.

11. The method according to claim 10, wherein the performing feature extraction on a target object by using a feature extraction model, to obtain a feature of the target object comprises:

performing feature extraction on the target object by using a first feature extraction layer, to obtain the feature of the target object, wherein the first feature extraction layer is any one of a plurality of feature extraction layers in the feature extraction model; and
the obtaining a distance between the feature of the target object and a weight vector of the feature extraction model comprises:
obtaining a distance between the feature of the target object and a weight vector of a second feature extraction layer, wherein the second feature extraction layer is any one of the plurality of feature extraction layers.

12. The method according to claim 11, wherein the first feature extraction layer and the second feature extraction layer are different feature extraction layers.

13. The method according to claim 11 or 12, wherein the first feature extraction layer is a penultimate feature extraction layer in the plurality of feature extraction layers in the feature extraction model, the plurality of feature extraction layers are connected end-to-end, the target object is an input of the first feature extraction layer in the plurality of feature extraction layers, and the second feature extraction layer is a last feature extraction layer in the plurality of feature extraction layers.

14. The method according to any one of claims 11 to 13, wherein there are a plurality of weight vectors of the second feature extraction layer, and the obtaining a distance between the feature of the target object and a weight vector of a second feature extraction layer comprises:
obtaining a distance between the feature of the target object and each weight vector of the second feature extraction layer, wherein when a longest distance in a plurality of distances exceeds the preset threshold, the target object is an abnormal sample.

15. The method according to any one of claims 10 to 14, wherein the feature extraction model is specifically obtained by updating the preset model by using the first loss value and a second loss value, the second loss value is determined based on a deviation between a target result and a real result of the training sample, the target result is determined based on a first prediction result and a preset function, the first prediction result is a prediction result of the preset model for the training sample, an input of the preset function is the first prediction result, an output of the preset function is the target result, and the output of the preset function is negatively correlated with the input of the preset function.

16. The method according to any one of claims 10 to 15, wherein the plurality of objects are obtained by performing disturbance processing on a first image, and the method further comprises:
deleting the target object from the plurality of objects to obtain a plurality of updated objects, wherein the plurality of updated objects are used to obtain a saliency map of the first image.

17. The method according to any one of claims 10 to 15, wherein the plurality of objects are obtained by performing disturbance processing on a first image, and the method further comprises:

if the distance does not exceed the preset threshold, determining that the target object is a normal object;
if the target object is an abnormal object, setting a weight of the target object to a first weight;
if the target object is a normal object, setting the weight of the target object to a second weight, wherein the second weight is greater than the first weight; and
processing the feature of the target object based on the first weight or the second weight to obtain a processed target object, wherein the processed target object is used to obtain a saliency map of the first image.

18. An apparatus for generating a saliency map, comprising:

an obtaining module, configured to obtain a plurality of objects, wherein the plurality of objects are obtained by performing disturbance processing on a first object;
a screening module, configured to perform, based on a first condition, screening processing on the plurality of objects obtained by the obtaining module, to obtain a plurality of updated objects, wherein the plurality of updated objects satisfy target data distribution, the target data distribution is obtained based on a training sample, and the training sample is used to train a preset model to obtain a target model; and

a generation module, configured to generate a saliency map of the first object based on a first prediction result output by the target model and the plurality of updated objects, wherein an input of the target model is obtained based on the plurality of updated objects.

19. The apparatus according to claim 18, wherein the first condition is deleting a target object from the plurality of objects, a distance between a feature of the target object and a weight vector of the target model exceeds a preset threshold, and the feature of the target object is obtained by performing feature extraction on the target object by using the target model.

20. The apparatus according to claim 19, wherein the feature of the target object is specifically extracted by using a first feature extraction layer, the first feature extraction layer is any one of a plurality of feature extraction layers in the target model, the distance between the feature of the target object and the weight vector of the target model is specifically a distance between the feature of the target object and a weight vector of a second feature extraction layer, and the second feature extraction layer is any one of the plurality of feature extraction layers.

21. The apparatus according to claim 20, wherein the first feature extraction layer and the second feature extraction layer are different feature extraction layers.

22. The apparatus according to claim 20 or 21, wherein the first feature extraction layer is specifically a penultimate feature extraction layer in a plurality of feature extraction layers in a feature extraction model, the plurality of feature extraction layers are connected end-to-end, the target object is an input of the first feature extraction layer in the plurality of feature extraction layers, and the second feature extraction layer is specifically a last feature extraction layer in the plurality of feature extraction layers.

23. The apparatus according to any one of claims 20 to 22, wherein a distance between the feature of the target object and a target weight vector of the second feature extraction layer exceeds the preset threshold, the distance between the feature of the target object and the target weight vector of the second feature extraction layer is a longest distance in a plurality of distances, and the plurality of distances comprise a distance between the feature of the target object and each weight vector of the second feature extraction layer.

24. The apparatus according to any one of claims 18 to 23, wherein the target model is obtained by updating the preset model by using a first loss value, the first loss value is determined based on a deviation between a feature of the training sample and a weight vector of the preset model, and the feature of the training sample is obtained by performing feature extraction on the training sample by using the preset model.

25. The apparatus according to claim 24, wherein the target model is specifically obtained by updating the preset model by using the first loss value and a second loss value, the second loss value is determined based on a deviation between a target result and a real result of the training sample, the target result is determined based on a second prediction result and a preset function, the second prediction result is a prediction result of the preset model for the training sample, an input of the preset function is the second prediction result, an output of the preset function is the target result, and the output of the preset function is negatively correlated with the input of the preset function.

26. The apparatus according to any one of claims 18 to 25, further comprising a weight module, wherein the weight module is configured to:

set weights of the plurality of updated objects to a first weight;
set weights of a plurality of remaining objects to a second weight, wherein the plurality of remaining objects are objects other than the plurality of updated objects in the plurality of objects, and the first weight is greater than the second weight; and
one input of the target model is specifically obtained based on the plurality of updated objects and the first weight, and another input of the target model is obtained based on the plurality of remaining objects and the second weight.

27. An apparatus for detecting an abnormal object, comprising:

a first obtaining module, configured to obtain a plurality of objects;

a feature extraction module, configured to perform feature extraction on a target object by using a feature extraction model, to obtain a feature of the target object, wherein the target object is any one of the plurality of objects, the feature extraction model is obtained by updating a preset model by using a first loss value, the first loss value is determined based on a deviation between a feature of a training sample and a weight vector of the preset model, and the feature of the training sample is obtained by performing feature extraction on the training sample by using the preset model; and

a second obtaining module, configured to obtain a distance between the feature of the target object and a weight vector of the feature extraction model, wherein when the distance exceeds a preset threshold, the target object is an abnormal object.

28. The apparatus according to claim 27, wherein the feature extraction module is specifically configured to:

perform feature extraction on the target object by using a first feature extraction layer, to obtain the feature of the target object, wherein the first feature extraction layer is any one of a plurality of feature extraction layers in the feature extraction model; and

the obtaining a distance between the feature of the target object and a weight vector of the feature extraction model comprises:

obtaining a distance between the feature of the target object and a weight vector of a second feature extraction layer, wherein the second feature extraction layer is any one of the plurality of feature extraction layers.

29. The apparatus according to claim 28, wherein the first feature extraction layer and the second feature extraction layer are different feature extraction layers.

30. The apparatus according to claim 28 or 29, wherein the first feature extraction layer is a penultimate feature extraction layer in the plurality of feature extraction layers in the feature extraction model, the plurality of feature extraction layers are connected end-to-end, the target object is an input of the first feature extraction layer in the plurality of feature extraction layers, and the second feature extraction layer is a last feature extraction layer in the plurality of feature extraction layers.

31. The apparatus according to any one of claims 28 to 30, wherein the second obtaining module is specifically configured to:

obtain a distance between the feature of the target object and each weight vector of the second feature extraction layer, wherein when a longest distance in a plurality of distances exceeds the preset threshold, the target object is an abnormal sample.

32. The apparatus according to any one of claims 27 to 31, wherein the feature extraction model is specifically obtained by updating the preset model by using the first loss value and a second loss value, the second loss value is determined based on a deviation between a target result and a real result of the training sample, the target result is determined based on a first prediction result and a preset function, the first prediction result is a prediction result of the preset model for the training sample, an input of the preset function is the first prediction result, an output of the preset function is the target result, and the output of the preset function is negatively correlated with the input of the preset function.

33. The apparatus according to any one of claims 27 to 32, wherein the plurality of objects are obtained by performing disturbance processing on a first image, and the apparatus further comprises a generation module, wherein the generation module is configured to:

delete the target object from a plurality of disturbed first images to obtain a plurality of updated objects, wherein the plurality of updated objects are used to obtain a saliency map of the first image.

34. The apparatus according to any one of claims 27 to 32, wherein the plurality of objects are obtained by performing disturbance processing on a first image, the target object is a normal object when the distance does not exceed the preset threshold, and the apparatus further comprises a weight module and a generation module, wherein the weight module is configured to:

if the target object is an abnormal object, set a weight of the target object to a first weight; or
if the target object is a normal object, set a weight of the target object to a second weight, wherein the second weight is greater than a first weight; and

the generation module is configured to process the feature of the target object based on the first weight or the second weight to obtain a processed target object, wherein the processed target object is used to obtain a saliency map of the first image.

35. An apparatus for generating a saliency map, comprising a processor, wherein the processor is coupled to a memory, the memory stores program instructions, and when the program instructions stored in the memory are executed by the processor, the method according to any one of claims 1 to 9 is implemented.

36. An apparatus for detecting an abnormal object, comprising a processor, wherein the processor is coupled to a memory, the memory stores program instructions, and when the program instructions stored in the memory are executed by the processor, the method according to any one of claims 10 to 17 is implemented.

37. A computer-readable storage medium, comprising a program, wherein when the program runs on a computer, the computer is enabled to perform the method according to any one of claims 1 to 9, or the computer is enabled to perform the method according to any one of claims 10 to 17.

38. A circuit system, wherein the circuit system comprises a processing circuit, and the processing circuit is configured to perform the method according to any one of claims 1 to 9, or configured to perform the method according to any one of claims 10 to 17.

39. A computer program product, wherein the computer program product comprises instructions, and when the instructions are loaded and executed by an electronic device, the electronic device is enabled to perform the method according to any one of claims 1 to 9, or the electronic device is enabled to perform the method according to any one of claims 10 to 17.

40. A chip, wherein the chip is coupled to a memory, and configured to execute a program stored in the memory, to perform the method according to any one of claims 1 to 9, or perform the method according to any one of claims 10 to 17.

FIG. 1

To-be-processed image

Randomly sample a plurality of pixels for masking

Disturbed to-be-processed images

Classification model

Prediction result

0.09

0.74

...

0.56

Saliency map

Weighting processing

FIG. 2

Obtain a plurality of objects                                                                301

Perform screening processing on the plurality of objects based on a first condition, to obtain a plurality of updated objects, where the plurality of updated objects satisfy target data distribution                                                                302

Generate a saliency map of a first object based on a first prediction result                                                                303

FIG. 3

Obtain a plurality of objects — 301

Perform screening processing on the plurality of objects based on a first preset condition, to obtain a plurality of updated objects, where the plurality of updated objects satisfy target data distribution — 302

Set a weight of a normal object to a first weight, and set a weight of an abnormal object to a second weight, where the first weight is greater than the second weight — 3031

Generate a saliency map of a first object based on a first prediction result — 303

FIG. 4

Perform feature extraction on a training sample to obtain a feature of the training sample  — 501

Obtain a first loss value based on a deviation between the feature of the training sample and a weight vector of a preset model  — 502

Update the preset model based on the first loss value  — 503

FIG. 5

Target data distribution space

FIG. 6

Perform feature extraction on a training sample to obtain a feature of the training sample — 701

Obtain a first loss value based on a deviation between the feature of the training sample and a weight vector of a preset model — 702

Obtain a second loss value based on a deviation between a target result and a real result of the training sample — 703

Update the preset model based on the first loss value and the second loss value — 704

FIG. 7

FIG. 8

FIG. 9

EP 4 290 406 A1

Medical image

Target
model

Abnormal sample detection

Disease
diagnosis

Medical image

Disturbance

Target model

Abnormal sample detection

Abnormal sample deletion

Explainable
algorithm

Saliency map

FIG. 10

FIG. 11

FIG. 12

200

Database 230

Training device
220

First machine learning
model/rule 201

Execution device 210

Data storage
system 240

FIG. 13

Input data         Output explanation

Software

Explainable
toolkit

AI framework

Invoke

Hardware

Processor

FIG. 14

1501        1502        1505

Obtaining
module

Screening
module

Weight
module

1503        1504

Prediction
module

Generation
module

FIG. 15

First
obtaining
module

1601

Feature
extraction
module

1602

Second
obtaining
module

1603

Anomaly
detection
module

1604

Weight
module

1605

FIG. 16

1700

Training apparatus

1722 — Central processing unit

Power supply — 1726

Wired or wireless network interface — 1750

Operating system — 1741

Data — 1744

Application program — 1742

Storage medium — 1730

Input/Output interface — 1758

Memory — 1732

FIG. 17

1800

Execution device

Antenna

Antenna

| Receiver 1801 | Transmitter 1802 |

Processor 1803

| Memory 1804 | Application processor 18031 | Communication processor 18032 |

FIG. 18

FIG. 19

## INTERNATIONAL SEARCH REPORT

International application No.

**PCT/CN2022/080552**

### A. CLASSIFICATION OF SUBJECT MATTER

G06K 9/00(2022.01)i; G06K 9/62(2022.01)i; G06N 3/04(2006.01)i; G06N 3/08(2006.01)i

According to International Patent Classification (IPC) or to both national classification and IPC

### B. FIELDS SEARCHED

Minimum documentation searched (classification system followed by classification symbols)

G06K G06N

Documentation searched other than minimum documentation to the extent that such documents are included in the fields searched

Electronic data base consulted during the international search (name of data base and, where practicable, search terms used)

CNABS; CNTXT; CNKI; VEN; USTXT; WOTXT; EPTXT; IEEE: 华为, 显著图, 扰动, 异常, 分布, 训练, 特征提取层, 损失, 权重, 偏差, saliency map, perturbation, anomaly, training, feature extraction layer, loss, weight, bias

### C. DOCUMENTS CONSIDERED TO BE RELEVANT

| Category* | Citation of document, with indication, where appropriate, of the relevant passages | Relevant to claim No. |
|---|---|---|
| X | CN 112241758 A (ROBERT BOSCH GMBH) 19 January 2021 (2021-01-19) description, paragraphs [0038]-[0151] | 1, 2, 7, 10, 16-19, 24, 27, 33-40 |
| A | CN 112241758 A (ROBERT BOSCH GMBH) 19 January 2021 (2021-01-19) description, paragraphs [0038]-[0151] | 3-6, 8, 9, 11-15, 20-23, 25, 26, 28-32 |
| A | CN 108615048 A (ZHEJIANG UNIVERSITY OF TECHNOLOGY) 02 October 2018 (2018-10-02) entire document | 1-40 |
| A | US 2021034974 A1 (ROYAL BANK OF CANADA) 04 February 2021 (2021-02-04) entire document | 1-40 |

☐ Further documents are listed in the continuation of Box C.  ☑ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **08 April 2022** | **26 April 2022** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
**Information on patent family members**

International application No.

**PCT/CN2022/080552**

| Patent document cited in search report | | | Publication date (day/month/year) | Patent family member(s) | | | Publication date (day/month/year) |
|---|---|---|---|---|---|---|---|
| CN | 112241758 | A | 19 January 2021 | EP | 3767534 | A1 | 20 January 2021 |
| CN | 108615048 | A | 02 October 2018 | CN | 108615048 | B | 23 June 2020 |
| US | 2021034974 | A1 | 04 February 2021 | CA | 3088674 | A1 | 31 January 2021 |

Form PCT/ISA/210 (patent family annex) (January 2015)

**REFERENCES CITED IN THE DESCRIPTION**

**Patent documents cited in the description**

- CN 202110277005